(19) Europäisches Patentamt
European Patent Office
Office européen des brevets

(11) **EP 4 021 056 A1**

(12) **EUROPEAN PATENT APPLICATION**
published in accordance with Art. 153(4) EPC

(43) Date of publication:
**29.06.2022 Bulletin 2022/26**

(21) Application number: **19943102.4**

(22) Date of filing: **23.08.2019**

(51) International Patent Classification (IPC):
**H04W 16/32** (2009.01)    **H04W 52/24** (2009.01)

(52) Cooperative Patent Classification (CPC):
**H04W 16/32; H04W 52/24**

(86) International application number:
**PCT/JP2019/033152**

(87) International publication number:
**WO 2021/038654 (04.03.2021 Gazette 2021/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
• **OKAMURA, Masaya**
  **Tokyo 100-6150 (JP)**
• **MATSUMURA, Yuki**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL AND WIRELESS COMMUNICATION METHOD**

(57)    A terminal according to an aspect of the present disclosure includes a receiving section that receives a reference signal for pathloss reference from one of a first point that transmits downlink data and a second point that transmits no downlink data, and a control section that controls transmission power for a physical uplink shared channel (PUSCH) to the second point based on the reference signal for pathloss reference. According to an aspect of the present disclosure, a parameter for the transmission power can be appropriately determined.

FIG. 1A

GENERAL DEPLOYMENT

**(Cont. next page)**

# FIG. 1B

UL DENSE DEPLOYMENT

CENTRAL TRP

RECEPTION
POINT

DL

UL

UE

**Description**

Technical Field

The present disclosure relates to a terminal and a radio communication method in next-generation mobile communication systems.

Background Art

In Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G))," "5G+ (plus)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In radio communication systems such as Rel. 15 NR, coverage varies depending on an uplink (UL) or a downlink (DL), a channel, and the like. For improved coverage of UL signals (UL channels), provision of reception points for UL signals has been under study in addition to transmission/reception points.

However, how to determine transmission power to transmission/reception points or reception points is not clear. The lack of appropriate determination of transmission power may cause degradation of system performance such as a limited coverage and a reduced throughput.

Thus, an object of the present disclosure is to provide a terminal and a radio communication method that can appropriately determine transmission power for a UL signal.

Solution to Problem

A terminal according to an aspect of the present disclosure includes a receiving section that receives a reference signal for pathloss reference from one of a first point that transmits downlink data and a second point that transmits no downlink data, and a control section that controls transmission power for a physical uplink shared channel (PUSCH) to the second point based on the reference signal for pathloss reference.

Advantageous Effects of Invention

According to an aspect of the present disclosure, the transmission power for the UL signal can be appropriately determined.

Brief Description of Drawings

FIGS. 1A and 1B are diagrams to show an example of a configuration using transmission/reception points and reception points;
FIG. 2 is a diagram to show an example of a configuration of two or more SRS resource sets;
FIGS. 3A and 3B are diagrams to show an example of a source of a pathloss reference RS according to Embodiment 1;
FIG. 4 is a diagram to show an example of a configuration of two SRS resource sets;

FIGS. 5A and 5B are diagrams to show an example of a particular UL signal according to Embodiment 1;

FIG. 6 is a diagram to show an example of two PUCCH spatial relation information;

FIGS. 7A and 7B are diagrams to show an example of an indication of an additional factor D according to Embodiment 1;

FIG. 8 is a diagram showing an example of association between a reception point group and $\beta$;

FIG. 9 is a diagram showing an example of association between the reception point group and the range of DL pathloss and the additional factor S;

FIG. 10 is a diagram showing an example of reception point group determination method 1-1;

FIG. 11 is a diagram showing an example of association between the reception point group and the range of RSRP and the additional factor S;

FIG. 12 is a diagram showing an example of reception point group determination method 1-2;

FIG. 13 is a diagram showing an example of association between the reception point group and the range of RSRP-CRE and the additional factor S;

FIG. 14 is a diagram showing another example of reception point group determination method 1-2;

FIG. 15 is a diagram showing an example of association between the reception point group and the range of RSRQ and the additional factor S;

FIG. 16 is a diagram showing an example of reception point group determination methods 1-3 and 1-4;

FIG. 17 is a diagram showing an example of association between the reception point group and the range of SINR and the additional factor S;

FIGS. 18A and 18B are diagrams showing an example of association between the reception point group and the range of a distance $D_i$ and the additional factor S according to Embodiment 1.

FIGS. 19A and 19B are diagrams showing an example of association between the reception point group and the range of the distance $D_i$ and the additional factor S according to Embodiment 1;

FIG. 20 is a diagram showing an example of reception point group determination method 1-5;

FIG. 21 is a diagram showing an example of reception point group determination method 1-6;

FIGS. 22A and 22B are diagrams to show an example of a configuration or an indication of the additional factor S according to Embodiment 1;

FIGS. 23A and 23B are diagrams to show an example of a source of a pathloss reference RS according to Embodiment 2;

FIGS. 24A and 24B are diagrams to show an example of a particular UL signal according to Embodiment 2;

FIGS. 25A and 25B are diagrams to show an example of an indication of the additional factor D according to Embodiment 2;

FIGS. 26A and 26B are diagrams showing an example of association between the reception point group and the range of the distance $D_i$ and the additional factor S according to Embodiment 2.

FIGS. 27A and 27B are diagrams showing an example of association between the reception point group and the range of the distance $D_i$ and the additional factor S according to Embodiment 2;

FIG. 28 is a diagram showing an example of reception point group determination method 2-1;

FIG. 29 is a diagram showing an example of reception point group determination method 2-2;

FIGS. 30A and 30B are diagrams to show an example of a configuration or an indication of the additional factor S according to Embodiment 2;

FIG. 31 is a diagram to show an example of an MAC CE indicating the source of the pathloss reference RS;

FIGS. 32A and 32B are diagrams to show an example of the source of the pathloss reference RS according to Embodiment 3;

FIG. 33 is a diagram showing an example of association between a TPC command field value and a TPC command value;

FIG. 34 is a diagram to show an example of a schematic structure of a radio communication system according to one embodiment;

FIG. 35 is a diagram to show an example of a structure of a base station according to one embodiment;

FIG. 36 is a diagram to show an example of a structure of a user terminal according to one embodiment; and

FIG. 37 is a diagram to show an example of a hardware structure of the base station and the user terminal according to one embodiment.

Description of Embodiments

(Transmission Power Control)

<PUSCH Transmission Power Control>

In NR, transmission power for a PUSCH is controlled based on a TPC command (also referred to as a value, a change value, a correction value, and so on) indicated by a value in a certain field (also referred to as a TPC command field and so on) in DCI.

For example, in a case where a UE uses a parameter set (open loop parameter set) with an index j and an index l of a power control adjustment state (PUSCH power control adjustment state) to transmit the PUSCH on an active UL BWP b of a carrier f of a serving cell c, transmission power for PUSCH ($P_{PUSCH,b,f,c}(i,j,q_d,l)$) on a PUSCH transmission occasion (also referred to as a transmission period or the like) may be expressed by Equation (1) below. The power control adjustment state may also be referred to as the value of the power control adjustment state index l based on the TPC command, an accumulated value of the TPC command, or a value based on a closed loop. l may also be referred to as a closed loop index.

The PUSCH transmission occasion i is a period when the PUSCH is transmitted and may include, for example, one or more symbols, one or more slots, or the like.

[Math. 1]

Equation (1)

$$P_{\text{PUSCH},b,f,c}(i,j,q_d,l)$$

$$= min \begin{Bmatrix} P_{\text{CMAX},f,c}(i), \\ P_{\text{O\_PUSCH},b,f,c}(j) + 10\,log_{10}(2^{\mu} \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) \end{Bmatrix}$$

Here, $P_{CMAX,f,c(i)}$ is, for example, the transmission power (also referred to as maximum transmission power, UE maximum output power, and so on) of a user terminal configured for the carrier f of the serving cell c on the transmission occasion i. $P_{O\_PUSCH,b,f,c}(j)$ is, for example, a parameter (for example, a parameter related to a transmission power offset, a transmission power offset P0, a target received power parameter, and so on) related to a target received power configured for the active UL BWP b of the carrier f of the serving cell c on the transmission occasion i.

$M^{PUSCH}_{RB,b,f,c}(i)$ is, for example, the number of resource blocks (bandwidth) allocated to the PUSCH for the transmission occasion i in the active UL BWP b of the serving cell c and the carrier f at a subcarrier spacing $\mu$. $\alpha_{b,f,c}(j)$ is a value provided by a higher layer parameter (also referred to as, for example, msg3-Alpha, p0-PUSCH-Alpha, a fractional factor, and so on).

$PL_{b,f,c}(q_d)$ is, for example, pathloss (pathloss compensation) calculated by the user terminal by using an index $q_d$ of a reference signal (RS, a pathloss reference RS, a pathloss measuring DL RS, a PUSCH-PathlossReferenceRS, and so on) for a downlink BWP associated with the active UL BWP b of the carrier f of the serving cell c.

$\Delta_{TF,b,f,c}(i)$ is a transmission power adjustment component (offset, transmission format compensation) for the UL BWP b of the carrier f of the serving cell.

$f_{b,f,c}(i,l)$ is a PUSCH power control adjustment state for the active UL BWP b of the carrier f of the serving cell c on the transmission occasion i. For example, $f_{b,f,c}(i,l)$ may be expressed by Equation (2).

[Math. 2]

Equation (2)

$$f_{b,f,c}(i,l) = f_{b,f,c}(i-i_0,l) + \sum_{m=0}^{C(D_i)-1} \delta_{\text{PUSCH},b,f,c}(m,l)$$

Here, $\delta_{PUSCH,b,f,c}(i,l)$ may be a command value included in DCI format 0_0 or DCI format 0_1 used to schedule the PUSCH transmission occasion i on the active UL BWP b of the carrier f of the serving cell c or a TPC command value coded by concatenation with another TPC command in DCI format 2_2 with a CRC scrambled with a particular RNTI (Radio Network Temporary Identifier) (For example, a TPC-PUSCH-RNTI).

$\Sigma_{m=0}^{C(Di)-1}\delta_{PUCCH,b,f,c}(m,l)$ may be the total of TPC command values within a set $D_i$ of TPC command values with a cardinality $C(D_i)$. $D_i$ may be a set of TPC command values received by the UE between $K_{PUSCH}(i-i_0)-1$ symbols before a PUSCH transmission occasion $i-i_0$ and $K_{PUSCH}(i)$ symbols before a PUSCH transmission occasion $i$ on the active UL BWP b of the carrier f of the serving cell c, with respect to the PUSCH power control adjustment state l. $i_0$ may be the minimum positive integer at which $K_{PUSCH}(i-i_0)$ symbols before the PUSCH transmission occasion $i-i_0$ are earlier than $K_{PUSCH}(i)$ symbols before the PUSCH transmission occasion i.

In a case where the PUSCH transmission is scheduled by DCI format 0_0 or DCI format 0_1, $K_{PUSCH}(i)$ may be the number of symbols in the active UL BWP b of the carrier f of the serving cell c after the last symbol of a corresponding PDCCH reception and before the first symbol of the PUSCH transmission. In a case where the PUSCH transmission is configured by using configured grant configuration information (ConfiguredGrantConfig), $K_{PUSCH}(i)$ may be the number of $K_{PUSCH,min}$ symbols that is equal to the product of the number of symbols $N_{symb}^{slot}$ per slot in the active UL BWP b of the carrier f of the serving cell c and the minimum value of a value provided by k2 in PUSCH common configuration information(PUSCH-ConfigCommon).

For the power control adjustment state, whether to provide a plurality of states (for example, two states) or a single state may be configured by using a higher layer parameter. In a case where a plurality of power control adjustment states are configured, the index l (for example, l ∈ {0,1}) may be used to identify one of the plurality of power control adjustment states.

In a case of being provided with no pathloss reference RS (for example, PUSCH-PathlossReferenceRS) or with no specific higher layer parameter, the UE may calculate $PL_{b,f,c}(q_d)$ by using an RS resource from a synchronization signal (SS)/physical broadcast channel (PBCH) block (SS block (SSB)) used to obtain a Master Information Block (MIB).

In a case where the UE is configured with a number of RS resource indexes up to the value of the maximum number of pathloss reference RSs (for example, maxNrofPUSCH-PathlossReferenceRS) and with a set of RS configurations for the respective RE resource indexes by using pathloss reference RSs, the set of RS resource indexes may include one or both of a set of SS/PBCH block indexes and a set of channel state information (CSI)-reference signal (RS) resource indexes. The UE may identify the RS resource index $q_d$ in the set of RSS resource indexes.

In a case where the PUSCH transmission is scheduled by Random Access Response (RAR) UL grant, the UE may use the same RS resource index qd as that for the corresponding PRACH transmission.

In a case of being provided with a configuration of power control (for example, SRI-PUSCH-PowerControl) for the PUSCH based on a sounding reference signal (SRS) resource indicator (SRI) and with one or more values of IDs of pathloss reference RSs, the UE may obtain, through higher layer signaling (for example, sri-PUSCH-PowerControl-Id) in SRI-PUSCH-PowerControl), mapping between a set of values for SRI fields in DCI format 0_1 and a set of ID values of pathloss reference RSs. The UE may determine the RS resource index $q_d$ from the IDs of the pathloss reference RSs mapped to the SRI field values in DCI format 0_1 used to schedule the

PUSCH.

In a case where the PUSCH transmission is scheduled by DCI format 0_0 and the UE is provided with no PUCCH spatial relation information for a PUCCH resource with the lowest index for the active UL BWP b of each carrier f and the serving cell c, the UE may use the same RS resource index $q_d$ as that for the PUCCH transmission in the PUCCH resource.

In a case where the PUSCH transmission is not scheduled by DCI format 0_0 and the UE is provided with no spatial setting for the PUCCH transmission, or the PUSCH transmission is scheduled by DCI format 0_1 including no SRI fields, or the UE is provided with no configuration of power control for the PUSCH based on SRI, then the UE may use the RS resource index $q_d$ with the ID of the pathloss reference RS of zero.

In a case where the configured grant configuration (for example, ConfiguredGrantConfig) includes a certain parameter (for example, rrc-ConfiguredUplinkGrant) for the PUSCH transmission configured by the configured grant configuration, the UE may be provided with the RS resource index $q_d$ by the pathloss reference index (for example, pathlossReferenceIndex) in the certain parameter.

In a case where the configured grant configuration does not include a certain parameter for the PUSCH transmission configured by the configured grant configuration, the UE may determine the RS resource index $q_d$ from the values of IDs of the pathloss reference RSs mapped to the SRI field values in the DCI format for activating the PUSCH transmission. In a case where the DCI format includes no SRI fields, the UE may determine the RS resource index $q_d$ with the ID of the pathloss reference RS of zero.

Note that Equations (1) and (2) are illustrative and that no such limitation is intended. The user terminal may control the transmission power for the PUSCH based on at least one parameter illustrated in Equations (1) and (2), and additional parameters may be included or some of the parameters may be omitted. In Equations (1) and (2) described above, the transmission power for the PUSCH is controlled for each active UL BWP b of a certain carrier of a serving cell. However, no such limitation is intended. At least some of the serving cell, the carrier, the BWP, and the power control adjustment state may be omitted.

<PUCCH Transmission Power Control>

In NR, transmission power for the PUSCH is controlled based on a TPC command (also referred to as a value, a change value, a correction value, an indication value, and so on) indicated by a value in a certain field (also referred to as a TPC command field, a first field, and so on) in DCI.

For example, an index I of a power control adjustment state (PUCCH power control adjustment state) may be used to express, as Equation (3) below, the transmission power for PUCCH ($P_{PUCCH,b,f,c}(i,q_u,q_d,l)$) on a PUCCH transmission occasion (also referred to as a transmission period or the like) for the active UL BWP b of the carrier f of the serving cell c. The power control adjustment state may also be referred to as a value based on a TPC command with the power control adjustment state index I, an accumulated value of the TPC command, or a value based on a closed loop. I may also be referred to as a closed loop index.

The PUCCH transmission occasion i is a period when the PUCCH is transmitted and may include, for example, one or more symbols, one or more slots, or the like.

[Math. 3]

Equation (3)

$$P_{PUCCH,b,f,c}(i,q_u,q_d,l)$$
$$= min \left\{ \begin{array}{l} P_{CMAX,f,c}(i), \\ P_{O\_PUCCH,b,f,c}(q_u) + 10\,log_{10}(2^{\mu} \cdot M_{RB,b,f,c}^{PUCCH}(i)) + PL_{b,f,c}(q_d) + \Delta_{F\_PUCCH}(F) + \Delta_{TF,b,f,c}(i) + g_{b,f,c}(i,l) \end{array} \right\}$$

Here, $P_{CMAX,f,c}(i)$ is, for example, the transmission power (also referred to as maximum transmission power, UE maximum output power, and so on) of the user terminal configured for the carrier f of the serving cell c on the transmission occasion i. $P_{O\_PUCCH,b,f,c}(q_u)$ is, for example, a parameter (for example, a parameter related to the transmission power offset, the transmission power offset P0, the target received power parameter, and so on) related to the target received power configured for the active UL BWP b of the carrier f of the serving cell c on the transmission occasion i.

$M_{RB,b,f,c}^{PUSCH}(i)$ is, for example, the number of resource blocks (bandwidth) allocated to the PUCCH for the transmission occasion i in the active UL BWP b of the serving cell c and the carrier f at the subcarrier spacing $\mu$. $PL_{b,f,c}(q_d)$ is, for example, pathloss (pathloss compensation) calculated by the user terminal by using the index $q_d$ of the reference signal (the pathloss reference RS, pathloss measuring DL RS, PUCCH-PathlossReferenceRS, and so on) for the downlink BWP associated with the active UL BWP b of the carrier f of the serving cell c.

$\Delta_{F\_PUCCH}(F)$ is a higher layer parameter provided for each PUCCH format. $\Delta_{TF,b,f,c}(i)$ is a transmission power adjustment component (offset) for the UL BWP b of the carrier f of the serving cell.

$g_{b,f,c}(i,l)$ is the value, based on the TPC command (for example, the accumulated value of the TPC command, the value based on the closed loop, or the PUCCH power adjustment state), of the above-described control adjustment state index I of the active UL BWP b of the serving cell c and the carrier f on the transmission occasion i. For example, $g_{b,f,c}(i,l)$ may be expressed by Equation (4).

$g_{b,f,c}(i,l)$ is a PUCCH power control adjustment state for the active UL BWP b of the carrier f of the serving cell c on the transmission occasion i. For example, $g_{b,f,c}(i,l)$ may be expressed by Equation (2).

[Math. 4]

Equation (4)

$$g_{b,f,c}(i,l) = g_{b,f,c}(i-i_0,l) + \sum_{m=0}^{C(C_i)-1} \delta_{PUCCH,b,f,c}(m,l)$$

Here, $\delta_{PUCCH,b,fc}(i,l)$ is a TPC command value and may be included in DCI format 1_0 or DCI format 1_1 detected by the UE on the PUCCH transmission occasion i on the active UL BWP b of the carrier f of the serving cell c or may be coded by concatenation with another TPC command in DCI format 2_2 with a CRC scrambled with a particular RNTI (Radio Network Temporary Identifier) (For example, a TPC-PUSCH-RNTI).

$\sum_{m=0}^{C(Ci)-1} \delta_{PUCCH,b,f,c}(m,l)$ may be the total of TPC command values within a set $C_i$ of TPC command values with a cardinality $C(C_i)$. $C_i$ may be a set of TPC command values received by the UE between $K_{PUCCH}(i-i_0)-1$ symbols before the PUCCH transmission occasion $i-i_0$ and $K_{PUCCH}(i)$ symbols before the PUSCH transmission occasion i on the active UL BWP b of the carrier f of the serving cell c, with respect to the PUCCH power control adjustment state I. $i_0$ may

be the minimum positive integer at which $K_{PUCCH}(i-i_0)$ symbols before the PUSCH transmission occasion $i-i_0$ are earlier than $K_{PUCCH}(i)$ symbols before the PUSCH transmission occasion i.

In a case where the PUCCH transmission responds to detection of DCI format 1_0 or DCI format 1_1 by the UE, $K_{PUCCH}(i)$ may be the number of symbols in the active UL BWP b of the carrier f of the serving cell c after the last symbol of a corresponding PDCCH reception and before the first symbol of the PUCCH transmission. In a case where the PUCCH transmission is configured by using configured grant configuration information (ConfiguredGrantConfig), $K_{PUSCH}(i)$ may be the number of $K_{PUCCH,min}$ symbols that is equal to the product of the number of symbols $N_{symb}^{slot}$ per slot in the active UL BWP b of the carrier f of the serving cell c and the minimum value of a value provided by k2 in PUSCH common configuration information(PUSCH-ConfigCommon).

In a case where the UE is provided with information indicating the use of two PUCCH power control adjustment states (twoPUCCH-PC-AdjustmentStates) and PUCCH spatial relation information (PUCCH-SpatialRelationInfo), then l = {0, 1}, and in a case where the UE is not provided with the information indicating the use of two PUCCH power control adjustment states or the PUCCH spatial relation information, then l may be l = 0.

In a case where the UE obtains a TPC command value from DCI format 1_0 or 1_1 and where the UE is provided with PUCCH spatial relation information, then the UE may obtain mapping between PUCCH spatial relation information ID (pucch-SpatialRelationInfoId) values and closed loop indexes (closedLoopIndex, power adjustment state index l) based on indexes provided by a P0 ID for PUCCH (p0-PUCCH-Id in p0-Set in PUCCH-PowerControl in PUCCH-Config). In a case of receiving an activation command including the value of the PUCCH spatial relation information ID, the UE may determine the value of the closed loop index providing the value of l through a link to the corresponding to the P0 ID for PUCCH.

In a case where the UE is provided, through a higher layer, with a configuration of a $P_{0\_PUCCH,b,f,c}(q_u)$ value for the corresponding PUCCH power adjustment state l for the active UL BWP b of the carrier f of the serving cell c, then $g_{b,f,c}(i,l) = 0$, k = 0,1, ... i. In a case of being provided with PUCCH spatial relation information, the UE may determine the value of l from the value of $q_u$ based on the PUCCH spatial relation information associated with the P0 ID for PUCCH corresponding to $q_u$ and the closed loop index value corresponding to l.

$q_u$ may be a P0 ID for PUCCH (p0-PUCCH-Id) indicating P0 for PUCCH (P0-PUCCH) in a P0 set for PUCCH (P0-Set).

Note that Equations (3) and (4) are illustrative and that no such limitation is intended. The user terminal may control the transmission power for the PUCCH based on at least one parameter illustrated in Equations (3) and (4), and additional parameters may be included or some of the parameters may be omitted. In Equations (3) and (4) described above, the transmission power for the PUCCH is controlled for each active UL BWP b of a certain carrier of a serving cell. However, no such limitation is intended. At least some of the serving cell, the carrier, the BWP, and the power control adjustment state may be omitted.

<SRS Transmission Power Control>

For example, the index l of the power control adjustment state may be used to express, as Equation (5) below, the transmission power for SRS ($P_{SRS,b,f,c}(i,q_s,l)$) on an SRS transmission occasion (also referred to as a transmission period or the like) for the active UL BWP b of the carrier f of the serving cell c. The power control adjustment state may also be referred to as the value of the power control adjustment state index l based on the TPC command, the accumulated value of the TPC command, or the value based on the closed loop. l may also be referred to as a closed loop index.

The SRS transmission occasion i is a period when the SRS is transmitted and may include, for example, one or more symbols, one or more slots, or the like.

[Math. 5]

Equation (5)

$$P_{\mathrm{SRS},b,f,c}(i,q_s,l)$$

$$= min\left\{\begin{array}{l}P_{\mathrm{CMAX},f,c}(i),\\ P_{\mathrm{O\_SRS},b,f,c}(q_s) + 10\,log_{10}(2^{\mu} \cdot M_{\mathrm{SRS},b,f,c}(i)) + \alpha_{\mathrm{SRS},b,f,c}(q_s) \cdot PL_{b,f,c}(q_d) + h_{b,f,c}(i,l)\end{array}\right\}$$

Here, $P_{CMAX,f,c}(i)$ is, for example, the UE maximum output power for the carrier f of the serving cell c on the SRS transmission occasion i. $P_{O\_SRS,b,f,c}(q_u)$ is, for example, a parameter (for example, a parameter related to the transmission power offset, the transmission power offset P0, the target received power parameter, and so on) related to the target received power provided by p0 for the active UL BWP b of the carrier f of the serving cell c and for an SRS resource set $q_s$ (provided by SRS-ResourceSet and SRS-ResourceSetId).

$M^{SRS}_{b,f,c}(i)$ is an SRS bandwidth represented in the number of resource blocks for the SRS transmission occasion i on the active UL BWP b of the serving cell c and the carrier f at the subcarrier spacing $\mu$.

$\alpha_{SRS,b,f,c}(q_s)$ is provided by $\alpha$ (for example, alpha) for the active UL BWP b of the carrier f of the serving cell c and for the SRS resource set $q_s$.

$PL_{b,f,c}(q_d)$ is a DL pathloss estimated value [dB] calculated by the UE by using the RS resource index $q_d$ for the active UL BWP b of the carrier f of the serving cell c and for the SRS resource set $q_s$. The RS resource index qd is a pathloss reference RS (pathloss measuring DL RS, for example, provided by pathlossReferenceRS) associated with the SRS resource set $q_s$ and is an SS/PBCH block index (for example, ssb-Index) or a CSI-RS resource index (for example, csi-RS-Index).

$h_{b,f,c}(i,l)$ is an SRS power control adjustment state for the active UL BWP b of the carrier f of the serving cell c on the transmission occasion i. In a case where the configuration of the SRS power control adjustment state (for example, srs-PowerControlAdjustmentStates) indicates the same power control adjustment state for the SRS transmission and the PUSCH transmission, the SRS power control adjustment state is the current PUSCH power control adjustment state $f_{b,f,c}(i,l)$. On the other hand, in a case where the configuration of the SRS power control adjustment state indicates independent power control adjustment states for the SRS transmission and for the PUSCH transmission and no TPC accumulated configuration is provided, the SRS power control adjustment state $h_{b,f,c}(i)$ may be expressed by Equation (6).

[Math. 6]

Equation (6)

$$h_{b,f,c}(i) = h_{b,f,c}(i-1) + \sum_{m=0}^{C(S_i)-1} \delta_{SRS,b,f,c}(m)$$

Here, $\delta_{SRS,b,f,c}(m)$ may be a TPC command value coded by concatenation with another TPC command in the PDCCH with DCI (for example, DCI format 2_3). $\sum_{m=0}^{C(Si)-1}\delta_{SRS,b,f,c}(m)$ may be the total of TPC commands in a set Si of TPC command values received by the UE between $K_{PUSCH}(i-i_0)-1$ symbols before the SRS transmission occasion i-$i_0$ and $K_{PUSCH}(i)$ symbols before the SRS transmission occasion i on the active UL BWP b of the carrier f of the serving cell c, the TPC command values having a cardinality $C(S_i)$. Here, $i_0$ may be the minimum positive integer at which $K_{PUSCH}(i-i_0)$ symbols before the SRS transmission occasion i-$i_0$ are earlier than $K_{PUSCH}(i)$ symbols before the SRS transmission occasion i.

In a case where the SRS transmission is aperiodic, $K_{SRS}(i)$ may be the number of symbols in the active UL BWP b of the carrier f of the serving cell c after the last symbol of a corresponding PDCCH triggering the SRS transmission and before the first symbol of the SRS transmission. In a case where the SRS transmission is semi-persistent or periodic, $K_{SRS}(i)$ may be the number of $K_{SRS,min}$ symbols that is equal to the product of the number of symbols $N_{symb}^{slot}$ per slot in the active UL BWP b of the carrier f of the serving cell c and the minimum value of a value provided by k2 in PUSCH common configuration information (PUSCH-ConfigCommon).

Note that Equations (5) and (6) are illustrative and that no such limitation is intended. The user terminal may control the transmission power for the SRS based on at least one parameter illustrated in Equations (5) and (6), and additional parameters may be included or some of the parameters may be omitted. In Equations (5) and (6) described above, the transmission power for the SRS is controlled for each BWP of a certain carrier of a serving cell. However, no such limitation is intended. At least some of the cell, the carrier, the BWP, and the power control adjustment state may be omitted.

(UL Coverage)

In Rel. 15 NR, the PUSCH, the PUCCH, the PRACH, a PDSCH, a PDDCH, and a PBCH are not equivalent in coverage (reachable distance). At particularly high frequencies, the coverage of the PUSCH is limited. For future radio communication systems (for example, Rel. 16, Rel. 17, or later versions), improvement of at least one of UL coverage and UL throughput has been under study.

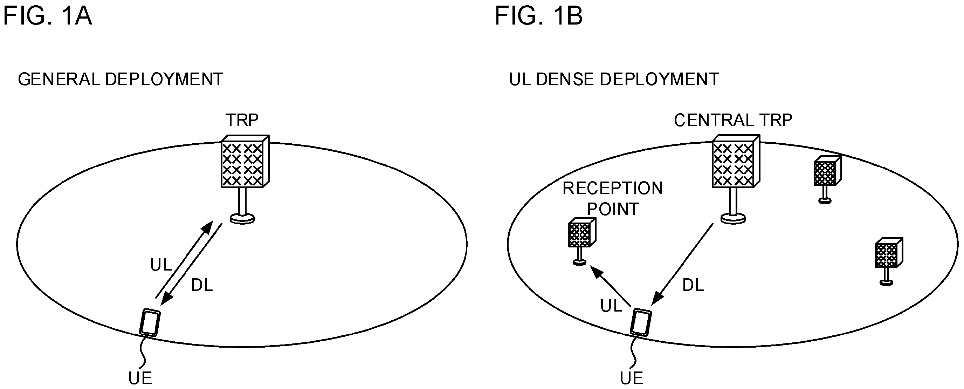

For extended UL coverage, reception points as shown in FIG. 1B may be provided in addition to transmission/reception points as shown in FIG. 1A. As used herein, the following may be replaced with one another: a transmission/reception point (TRP), a central TRP. a transmission and reception point, a main TRP, a transmission/reception (Tx and Rx) cell, a transmission/reception component carrier (CC), a transmission/reception bandwidth part (BWP), a first point, a primary point, and a first base station. As used herein, the following may be replaced with one another: a reception point (RP), a reception (Rx) point, a distributed TRP, an additional TRP, a restrictive TRP, a reception cell, a reception CC, a reception BWP, a second point, a secondary point, and a second base station.

The reception point may be connected by wire or wirelessly to a TRP (for example, a base station or the like) or a core network. The reception point may be treated as a network (NW) or a base station.

The reception point need not include a part of the configuration (capability, function, and so on) of the central TRP. At the reception point, at least one of the functions including transmission of DL control information, transmission of DL data, transmission of SS/PBCH blocks, and DL transmission may be omitted. The number of at least one component of the reception point including an antenna, a panel, an antenna element, and a radio frequency (RF) section (RF chain, RF circuit) may be smaller than the number of the components at a central TRP. The reception point may have lower maximum transmission power than the central TRP. The UE may receive a DL signal from the central TRP (for example, the PDCCH, PDSCH, or SS/PBCH block) and transmit, to the reception point, an UL signal (for example, the PUCCH, PUSCH, or SRS) based on the DL signal.

In the PUSCH transmission power control described above, the PUSCH power depends on a DL path (DL pathloss). In a case of measuring pathloss in the DL path from the TRP to the UE and transmitting the PUSCH in the UL path from the UE to the reception point, the UE fails to appropriately control the PUSCH power in a case where the DL path and the UL path differ significantly from each other.

The UE measures the reference signal (RS) from the central TRP or reception point, and the problem is how the UE determines the transmission power for a particular type of UL signal to the central TRP or reception point based on measurement results. The lack of appropriate determination of transmission power may cause degradation of system performance such as a limited coverage and a reduced throughput.

Thus, the inventors of the present invention came up with a method for determining the transmission power for the particular type of UL signal to the central TRP or the reception point.

Embodiments according to the present disclosure will be described in detail with reference to the drawings as follows. The radio communication method according to each embodiment may be employed independently or may be employed in combination.

As used herein, the TRP, an RS group, an antenna port group, and a control resource set (CORESET) group may be replaced with one another.

As used herein, a distributed TRP mode, a TRP mode, a separated location mode for transmission/reception points, a distributed transmission/reception mode, a separated TRP mode, TRP type 1, TRP type 2, TRP type A, and TRP type B may be replaced with one another.

As used herein, SRS may be at least one of A-SRS, P-SRS, and SP-SRS.

As used herein, the pathloss reference RS, a PUSCH pathloss reference RS, a PUCCH pathloss reference RS, an SRS pathloss reference RS, an SSB, an CSI-RS, and an RS may be replaced with one another.

As used herein, the following may be replaced with one another: the spatial relation, spatial relation information, a spatial relation assumption, a spatial domain transmission filter, a UE spatial domain transmission, a spatial domain filter, a UE transmission beam, a UL transmission beam, a DL-RS, a QCL assumption, an SRI, and the spatial relation based on the SRI.

(Radio Communication Method)

The UE may recognize the TRP mode (the TRP mode may be configured). A plurality of candidates for the TRP mode may include a distributed TRP mode and a localized TRP mode. As used herein, the distributed TRP mode, the use of the reception point, transmission of the particular type of UL signal to the reception point, a multi-TRP mode, and UL dense deployment may be replaced with one another. As used herein, the localized TRP mode, the non-use of the reception point, transmission of the particular type of UL signal using an existing method, a single TRP mode, a central TRP mode, and general deployment may be replaced with one another.

The particular type of UL signal as used herein may be replaced with a particular UL signal. The particular UL signal as used herein may be any one of the PUSCH, the PUCCH, and the SRS.

An additional factor D and an additional state D as used herein may be replaced with each other.

<Embodiment 1>

The reception point may transmit the pathloss reference RS. The UE may receive the pathloss reference RS from the reception point.

<<TRP Mode Recognition Method 1>>

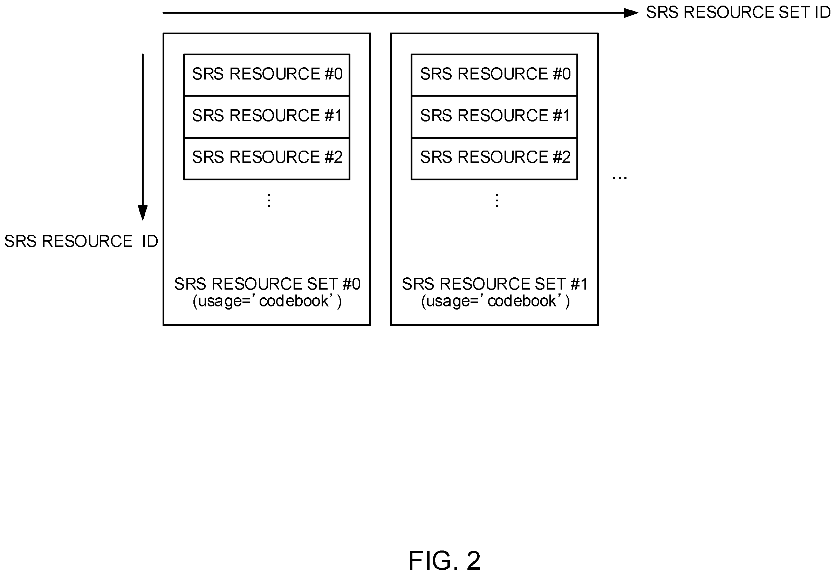

As shown in FIG. 2, in a case where X SRS resource sets (for example, SRS-ResourceSets) are configured, the UE may assume the distributed TRP mode. The particular usage may be codebook transmission or noncodebook transmission. X may be greater than 1. For example, X may be 2. X may be defined in specifications.

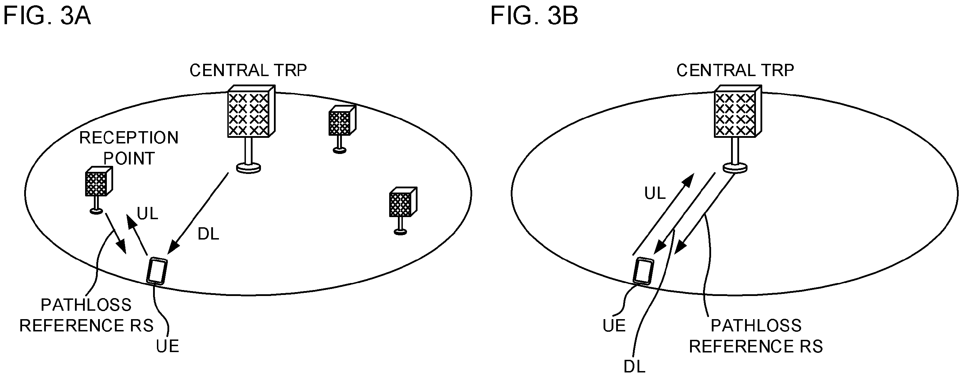

For example, in a case of being configured with two SRS resource sets with the particular usage for a codebook, the UE may assume the distributed TRP mode. In the distributed TRP mode, as shown in FIG. 3A, the UE may receive the pathloss reference RS from the reception point, use the pathloss reference RS to estimate the pathloss between the UE and the reception point, determine the transmission power for the particular UL signal based on measurement results, and transmit the particular UL signal to the reception point. The UE may receive the DL signal from the central TRP (DL control information and DL data, for example, the PDCCH and the PDSCH).

Otherwise (in a case where X SRS resource sets with particular usages are not configured), the UE may assume that the transmission power for the particular UL signal is calculated in accordance with an existing equation using the RS index $q_d$ (for example, Equation (1) or Equation (3) or Equation (5) described above). In this case, the UE may assume that the pathloss reference RS is transmitted from the central TRP (localized TRP mode may be assumed or it may be assumed that the pathloss reference RS is not transmitted from the reception point). As shown in FIG. 3B, in the localized TRP mode, the UE may receive the pathloss reference RS from the central TRP, use the pathloss reference RS to estimate the pathloss between the UE and the central TRP, determine the transmission power for the particular UL signal based on measurement results, and transmit the particular UL signal to the central TRP, as is the case with Rel. 15. The UE may receive the DL signal from the central TRP (DL control information and DL data, for example, the PDCCH and the PDSCH).

For example, in a case of being configured with one SRS resource sets with a particular usage, the UE may assume the localized TRP mode.

In a case where more than X SRS resource sets with particular usages are configured, the UE may assume the distributed TRP mode. For example, X may be 1 or more. For example, in a case where X = 1 and where more than one SRS resource set with a particular usage is configured, the UE may assume the distributed TRP mode.

The UE may recognize the TRP mode through higher layer signaling. For example, the UE may recognize the TRP mode depending on whether the UE is configured with a higher layer parameter indicating the distributed TRP mode (e.g., distributedTRPMode).

This method allows the UE to appropriately estimate the pathloss between the UE and the reception point.

<<Destination Recognition Method 1>>

In a case of being configured with a particular configuration, the UE may assume that spatial relation information (transmission beam) regarding the spatial relation between the UE and the central TRP is used to transmit a particular UL signal (the spatial relation ID of the spatial relation between the UE and the central TRP may be used for transmission of the particular UL signal).

Otherwise, the UE may assume that spatial relation information regarding the spatial relation between the UE and the reception point is used to transmit the particular UL signal (the spatial relation ID of the spatial relation between the UE and the reception point may be used for transmission of the particular UL signal).

[PUSCH or SRS]

In a case where the particular UL signal is the PUSCH or SRS, the particular configuration may be an SRS resource set (SRS-ResourceSet) having a particular SRS resource set ID (SRS-ResourceSetId) and having a particular usage. The particular SRS resource set ID may be at least one of an even number, an odd number, Y, 0, and 1.

The particular SRS resource set ID may be defined in the specifications or configured through higher layer signaling (the particular SRS resource set ID may be changed or switched). At least one Y may be configured through higher layer signaling.

One of the SRS resource sets that has a particular SRS resource set ID may include spatial relation information regarding the spatial relation between the UE and the central TRP. Those of the SRS resource sets which have SRS resource set IDs different from the particular SRS resource set ID may include spatial relation information regarding the spatial relation between the UE and the reception point.

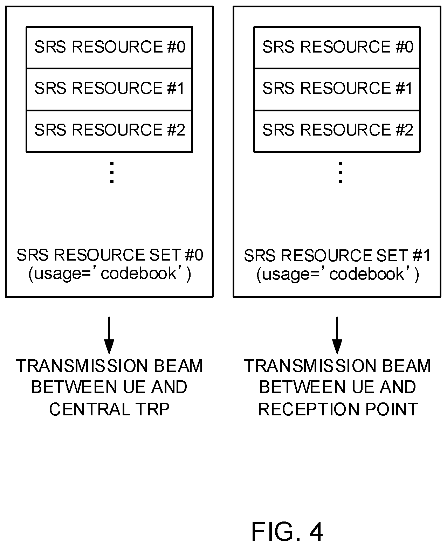

For example, it is assumed that the particular usage is a codebook or a noncodebook and that the particular SRS resource set ID is an even number and that the UE is configured with two SRS resource sets #0, #1 with the usage for a codebook as shown in FIG. 4. The UE may recognize the distributed TRP mode in a case where the number of SRS resource sets configured is greater than 1.

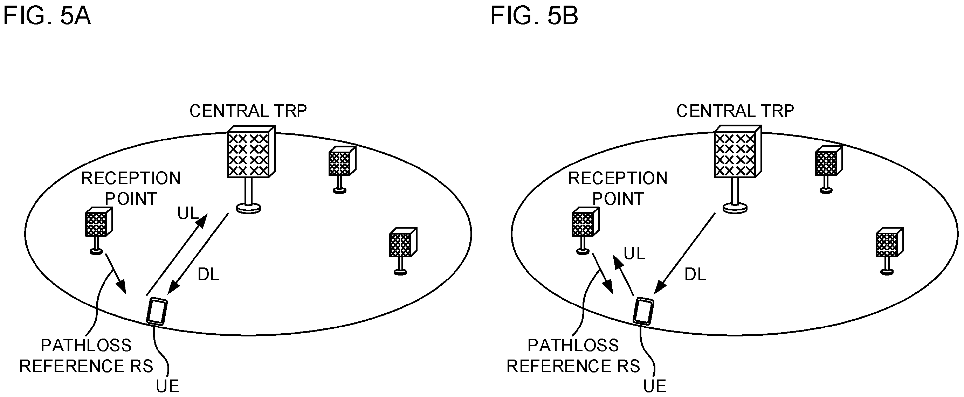

SRS resource set #0 indicates a transmission beam (spatial relation) between the UE and the central TRP. As shown in FIG. 5A, the UE uses the transmission beam based on SRS resource set #0 to transmit the particular UL signal (PUSCH or SRS) to the central TRP. SRS resource set #1 indicates a transmission beam (spatial relation) between the UE and the reception point. As shown in FIG. 5B, the UE uses the transmission beam based on SRS resource set #1 to transmit the particular UL signal (PUSCH or SRS) to the reception point. In both FIG. 5A and FIG. 5B, the UE may determine the transmission power for the particular UL signal (PUSCH or SRS) based on the pathloss reference RS from the reception point.

[PUCCH]

In a case where the particular UL signal is the PUCCH, the particular configuration may be PUCCH spatial relation information (PUCCH-SpatialRelationInfo) including a particular PUCCH spatial relation information ID (PUCCH-SpatialRelationInfoId). The particular PUCCH spatial relation information ID may be at least one of an even number, an odd number, Y, 0, and 1.

The particular PUCCH spatial relation information ID may be defined in the specifications or configured through higher layer signaling (the particular PUCCH spatial relation information ID may be changed or switched). At least one Y may be configured through higher layer signaling.

The PUCCH spatial relation information including the particular PUCCH spatial relation information ID may include the spatial relation information regarding the spatial relation between the UE and the central TRP. The PUCCH spatial relation information including a PUCCH spatial relation information ID different from the particular PUCCH spatial relation information ID may include the spatial relation information regarding the spatial relation between the UE and the reception point.

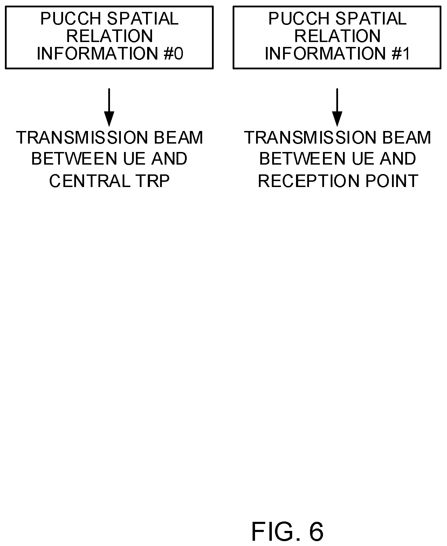

For example, it is assumed that the particular PUCCH spatial relation information ID is an even number and that as shown in FIG. 6, the UE is configured with two pieces of PUCCH spatial relation information #0, #1. The UE may recognize the distributed TRP mode in a case where the number of pieces of PUCCH spatial relation information configured is greater than 1.

PUCCH spatial relation information #0 indicates a transmission beam (spatial relation) between the UE and the central TRP. As shown in FIG. 5A, the UE uses the transmission beam based on PUCCH spatial relation information #0 to transmit the particular UL signal (PUCCH) to the central TRP. PUCCH spatial relation information #1 indicates a transmission beam (spatial relation) between the UE and the reception point. As shown in FIG. 5B, the UE uses the transmission beam based on PUCCH spatial relation information #1 to transmit the particular UL signal (PUCCH) to the reception point. In both FIG. 5A and FIG. 5B, the UE may determine the transmission power for the particular UL signal (PUCCH) based on the pathloss reference RS from the reception point.

According to this method, the UE can appropriately recognize the destination of the particular UL signal.

<<Transmission Power Control Method 1>>

The UE may determine the transmission power for the particular UL signal in accordance with at least one of transmission power control methods 1-1 to 1-5 described below.

<<Transmission Power Control Method 1-1>>

In a case of transmitting the particular UL signal to the central TRP, the UE assumes that the particular UL signal is transmitted by using the maximum output power $P_{CMAX,f,b,c}(i)$ (the particular UL signal may be transmitted by using the maximum output power configured). For example, the UE transmits the particular UL signal to the central TRP in a case where the UE includes a particular SRS resource set ID and is configured with an SRS resource set with a particular usage.

In a case of being configured with two physical cell identities (PCIs) and transmitting the particular UL signal to the central TRP, the UE assumes that the particular UL signal is transmitted by using the maximum output power $P_{CMAX,f,b,c}(i)$ configured.

The transmission power control method can suppress loads on the UE.

<<Transmission Power Control Method 1-2>>

In a case of being configured with the distributed TRP mode, the UE may assume that the particular UL signal is transmitted by using the maximum output power $P_{CMAX,f,b,c}(i)$ configured (the particular UL signal may be transmitted by using the maximum output power configured).

The transmission power control method can suppress loads on the UE.

<<Transmission Power Control Method 1-3>>

The UE may assume a CORESET for the central TRP or a different CORESET for the reception point (the different CORESET for the reception point may be assumed to be different from the CORESET for the central TRP).

The transmission power control method can suppress loads on the UE.

<<Transmission Power Control Method 1-4>>

In a case of transmitting the particular UL signal to the central TRP, the UE may assume that the additional factor (additional state) D is notified to the UE (the UE may be notified of the additional factor D). For example, a case in which the UE transmits the particular UL signal to the central TRP may correspond to a case in which the UE includes a particular SRS resource set ID and is configured with an SRS resource set with a particular usage.

The UE may calculate the transmission power to the central TRP by adding the additional factor D to the transmission power based on the pathloss between the reception point and the UE (pathloss reference RS from the reception point).

In a case where the particular UL signal is the PUSCH, the UE may determine the transmission power for the particular UL signal by using the following equation including D.

[Math. 7]

Equation (7)

$$
P_{\text{PUSCH},b,f,c}(i,j,q_d,l)
$$
$$
= min \left\{ \begin{array}{l} P_{\text{CMAX},f,c}(i), \\ P_{\text{O\_PUSCH},b,f,c}(j) + 10\,log_{10}(2^{\mu} \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) + D \end{array} \right\}
$$

In a case where the particular UL signal is the PUCCH, the UE may determine the transmission power for the particular UL signal by using the following equation including D.

[Math. 8]

Equation (8)

$$
P_{\text{PUCCH},b,f,c}(i,q_u,q_d,l)
$$
$$
= min \left\{ \begin{array}{l} P_{\text{CMAX},f,c}(i), \\ P_{\text{O\_PUCCH},b,f,c}(q_u) + 10\,log_{10}(2^{\mu} \cdot M_{\text{RB},b,f,c}^{\text{PUCCH}}(i)) + PL_{b,f,c}(q_d) + \Delta_{\text{F\_PUCCH}}(F) + \Delta_{\text{TF},b,f,c}(i) + g_{b,f,c}(i,l) + D \end{array} \right\}
$$

In a case where the particular UL signal is the SRS, the UE may determine the transmission power for the particular UL signal by using the following equation including D.

[Math. 9]

Equation (9)

$$
P_{\text{SRS},b,f,c}(i,q_s,l)
$$
$$
= min \left\{ \begin{array}{l} P_{\text{CMAX},f,c}(i), \\ P_{\text{O\_SRS},b,f,c}(q_s) + 10\,log_{10}(2^{\mu} \cdot M_{\text{SRS},b,f,c}(i)) + \alpha_{\text{SRS},b,f,c}(q_s) \cdot PL_{b,f,c}(q_d) + h_{b,f,c}(i,l) + D \end{array} \right\}
$$

The additional factor D may be configured by the higher layer parameter (for example, additionalStateD). The value of additionalStateD may be any one of {dB2, dB4, dB6, dB8} ({2, 4, 6, 8}[dB]).

The additional factor D may be activated or indicated by the MAC-CE or DCI.

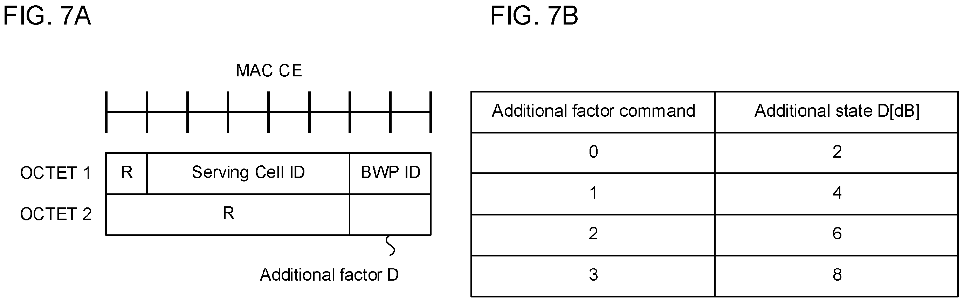

For example, as shown in FIG. 7A, an activation MAC CE for the additional factor D may include a 2-bit additional factor D field. The values of 00, 01, 10, 11 in the field may respectively indicate the values of 0, 2, 4, 6 [dB] for the additional factor D.

For example, as shown in FIG. 7B, the DCI may include an additional factor command field indicating the additional factor D. The values of 0, 1, 2, 3 in the additional factor command field (for example, 2 bits) may respectively indicate the values of 0, 2, 4, 6 [dB] for the additional factor D. The size of the additional factor command field in this example may be 2 bits.

In a case where the additional factor D is not provided, the UE may assume that the value of D is 0.

According to this method, the NW can directly control the transmission power for the particular UL signal.

<<Transmission Power Control Method 1-5>>

In a case of transmitting the particular UL signal to the central TRP, the UE may assume an additional factor S for power control for the particular UL signal to adjust a pathloss gap between the central TRP and the reception point. Otherwise, the UE need not assume the additional factor S.

The UE may calculate the transmission power to the central TRP by adding the additional factor S to the transmission power based on the pathloss between the reception point and the UE (pathloss reference RS from the reception point).

In a case where the particular UL signal is the PUSCH, the UE may determine the transmission power for the particular UL signal by using the following equation including S.

[Math. 10]

Equation (10)

$$P_{\mathrm{PUSCH},b,f,c}(i,j,q_d,l)$$
$$= min\begin{cases} P_{\mathrm{CMAX},f,c}(i), \\ P_{\mathrm{O\_PUSCH},b,f,c}(j) + 10\,log_{10}(2^\mu \cdot M_{\mathrm{RB},b,f,c}^{\mathrm{PUSCH}}(i)) + \alpha_{b,f,c}(j) \cdot PL_{b,f,c}(q_d) + \Delta_{\mathrm{TF},b,f,c}(i) + f_{b,f,c}(i,l) + S \end{cases}$$

In a case where the particular UL signal is the PUCCH, the UE may determine the transmission power for the particular UL signal by using the following equation including S.

[Math. 11]

Equation (11)

$$P_{\mathrm{PUCCH},b,f,c}(i,q_u,q_d,l)$$
$$= min\begin{cases} P_{\mathrm{CMAX},f,c}(i), \\ P_{\mathrm{O\_PUCCH},b,f,c}(q_u) + 10\,log_{10}(2^\mu \cdot M_{\mathrm{RB},b,f,c}^{\mathrm{PUCCH}}(i)) + PL_{b,f,c}(q_d) + \Delta_{\mathrm{F\_PUCCH}}(F) + \Delta_{\mathrm{TF},b,f,c}(i) + g_{b,f,c}(i,l) + S \end{cases}$$

In a case where the particular UL signal is the SRS, the UE may determine the transmission power for the particular UL signal by using the following equation including S.

[Math. 12]

Equation (12)

$$P_{\mathrm{SRS},b,f,c}(i,q_s,l)$$
$$= min\begin{cases} P_{\mathrm{CMAX},f,c}(i), \\ P_{\mathrm{O\_SRS},b,f,c}(q_s) + 10\,log_{10}(2^\mu \cdot M_{\mathrm{SRS},b,f,c}(i)) + \alpha_{\mathrm{SRS},b,f,c}(q_s) \cdot PL_{b,f,c}(q_d) + h_{b,f,c}(i,l) + S \end{cases}$$

The UE may determine S in accordance with any one of additional factor S determination methods 1-1 to 1-3.

[[Additional Factor S Determination Method 1-1]]

The UE may assume that the value of S is determined by the reception point group to which the UE belongs (the value of S may be determined by the reception point group to which the UE belongs). The reception point group may be determined in accordance with the reception point group determination method described below.

[[Additional Factor S Determination Method 1-2]]

The UE may assume that the value of S is calculated by using a particular equation (the value of S may be calculated by using a particular equation). The particular equation may be, for example, the following equation including pathloss.

$$S = floor(10 * PL_{b,f,c}(q_d))\ [dB]$$

[[Additional Factor S Determination Method 1-3]]

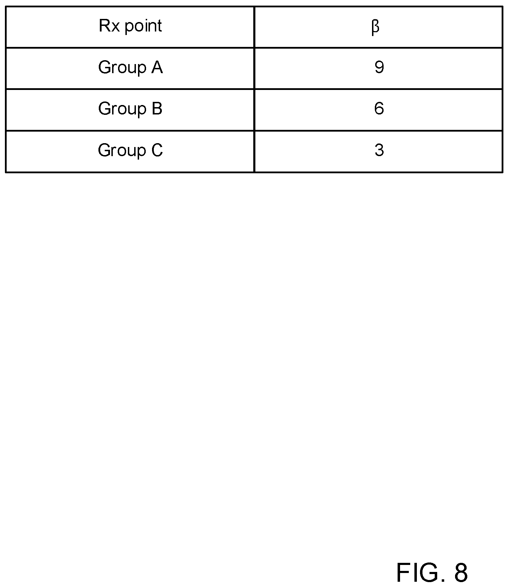

Additional factor S determination methods 1 and 2 may be combined. For example, as shown in FIG. 8, a table indicating association between groups of reception points (reception point groups) and β may be defined in the specifications. The reception point group to which the reception point belongs may be determined in accordance with reception point group determination method 1 described below. The UE may use this table to determine the value of β corresponding to the reception point group to which the UE belongs. The UE may calculate the value of S by using a particular equation and β. The particular equation may be, for example, the following equation including pathloss.

$$S = \text{floor}(\beta * PL_{b,f,c}(q_d))\,[dB]$$

The transmission power control method allows the UE to correct a difference in pathloss between the central TRP and the reception point.

<<Reception Point Group Determination Method 1>>

The groups of reception points (reception point groups) may be determined. "Group" may be replaced with "category."

The reception point groups may be determined in accordance with at least one of reception point group determination methods 1-1 to 1-6 described below.

<<Reception Point Group Determination Method 1-1>>

The reception point groups (reception point group) may be determined by using pathloss (measurement results for the pathloss reference RS from the reception point). The UE may use a DL path loss $PL_{b,f,c}(q_d)$ to determine the value of β corresponding to the reception point group to which each reception point belongs. The UE may measure the DL pathloss by using the pathloss reference RS received from the reception point. The UE may use the DL path loss to determine the reception point group and the additional factor S.

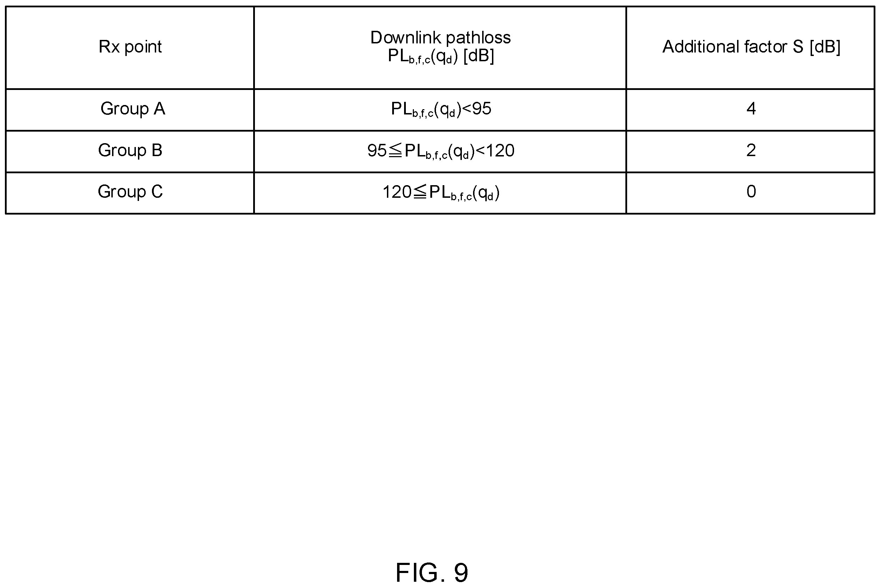

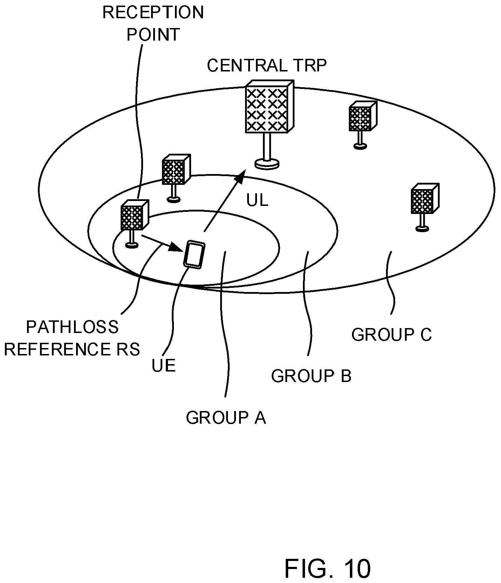

The reception point groups may be defined in the specifications. For example, as shown in FIG. 9, the association (for example, a table) between the reception point groups (groups A, B, C) and the range of the DL pathloss and the additional factor S may be defined in the specifications. In this case, as shown in FIG. 10, the groups A, B, C may be determined. The number of reception point groups is not limited to three and may be two or greater than three.

The example of this table indicates that the DL pathloss of the reception points belonging to the group A is less than the DL pathloss of the reception points belonging to the group B. It may be assumed that a smaller DL pathloss corresponds to a greater pathloss between the central TRP and the UE than between the reception point and the UE, leading to a greater additional factor S.

The association between the DL pathloss and the additional factor S may be defined in the specifications as an equation. The UE may use this equation to calculate the additional factor S from the DL pathloss.

<<Reception Point Group Determination Method 1-2>>

The reception point groups may be determined by using reception power (for example, reference signal received power (RSRP), the RSRP of the signal from the reception point). The UE may use the RSRP to determine the reception point group to which each reception point belongs. The UE may measure the RSRP by using the RS from the reception point (for example, the SSB, CSI-RS, pathloss reference RS, and so on). The RSRP may be at least one of a layer 3 (L3) synchronization signal (SS)-RSRP based on the SSB (for example, a secondary synchronization signal (SSS) in the SSB), a layer 1 (L1) SS-RSRP, and an L1 CSi-RSRP based on CSI-RS. The UE may use the RSRP to determine the reception point group and the additional factor S.

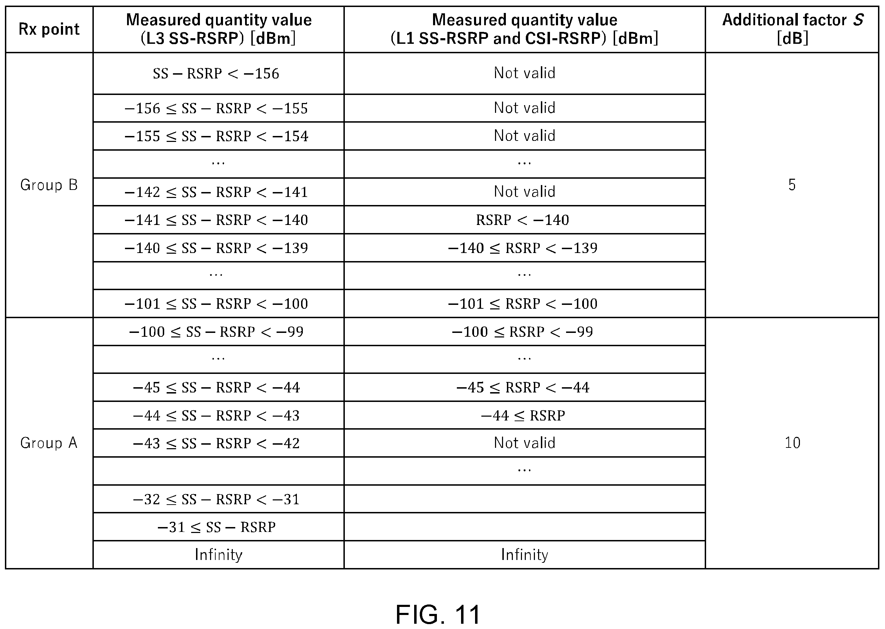

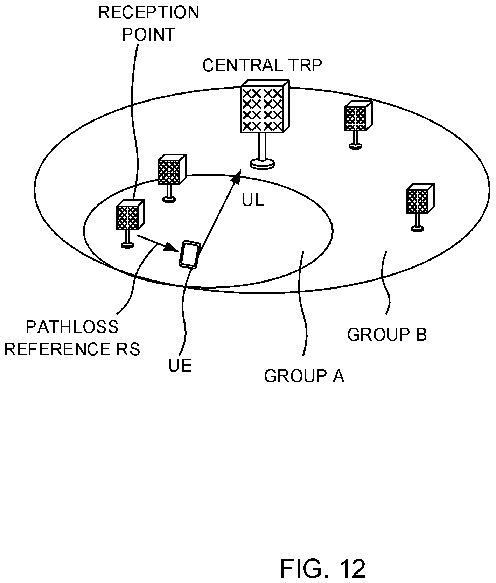

The reception point groups may be defined in the specifications. For example, as shown in FIG. 11, the association (for example, a table) between the reception point groups (groups A, B) and the range of the RSRP and the additional factor S may be defined in the specifications. In this case, as shown in FIG. 12, the groups A, B may be determined. The number of reception point groups is not limited to two and may be greater than two.

The example of this table indicates that the RSRP of the reception points belonging to the group A is greater than the RSRP of the reception points belonging to the group B. It may be assumed that greater RSRP corresponds to greater RSRP between the central TRP and the UE than between the reception point and the UE, leading to a greater additional factor S.

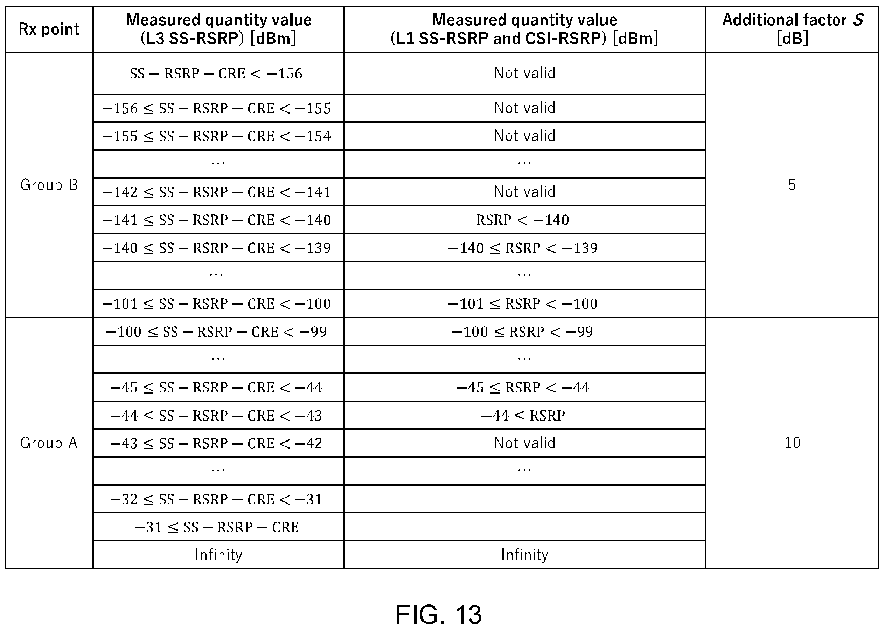

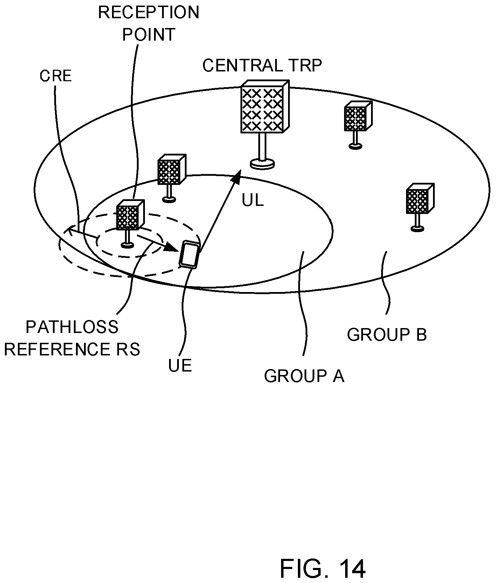

In a case of being configured with the value of cell range expansion (CRE), the UE may assume that the value of RSRP is corrected by the value of CRE (for example, RSRP - CRE) in order to determine the reception point groups. For example, as shown in FIG. 13, the association (for example, a table) between the reception point groups (groups A, B) and the range of RSRP - CRE and the additional factor S may be defined in the specifications. The value of CRE (for example, CreOffset) may be any one of {dB-24, dB-22, ..., dB22, dB24}({-24, -22, ..., 22, 24} [dB]). In this case, as shown in FIG. 14, the groups A, B may be determined.

The reception point may transmit a pathloss reference RS having lower transmission power than the RS transmitted by the central TRP (for example, at least one of the SSB, CSI-RS, and pathloss reference RS). In a case where no CRE is applied to the reception point, the problem is that many UEs are connected to the central TRP. In a case where the CRE is applied to the reception point, the problem can be avoided.

<<Reception Point Group Determination Method 1-3>>

The reception point groups may be determined by using reception quality (for example, reference signal received quality (RSRQ). The UE may use the RSRQ to determine the reception point group to which each reception point belongs. The UE may measure the RSRQ by using the RS from the reception point (for example, the SSB, CSI-RS, pathloss reference RS, and so on). The RSRQ may be at least one of the SS-RSRQ based on the SSB and the CSI-RSRQ based on the CSI-RS. The UE may use the RSRQ to determine the reception point group and the additional factor S.

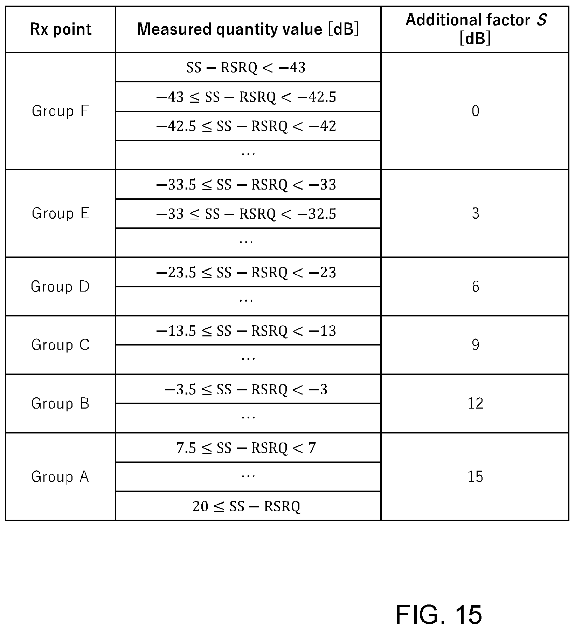

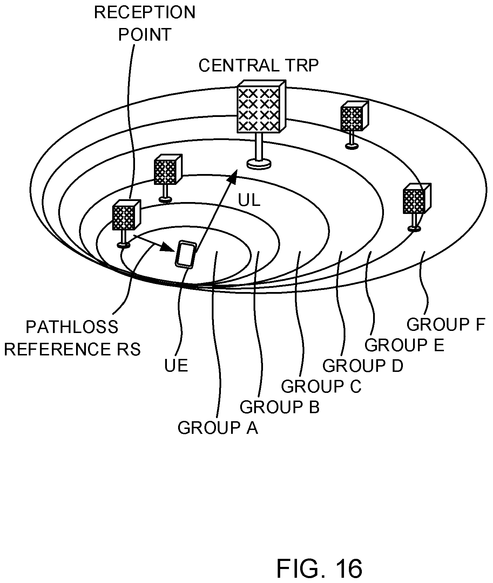

The reception point groups may be defined in the specifications. For example, as shown in FIG. 15, the association (for example, a table) between the reception point groups (groups A to F) and the range of the RSRQ and the additional factor S may be defined in the specifications. In this case, as shown in FIG. 16, the groups A to F may be determined. The number of reception point groups is not limited to six and may be an integer greater than one.

The example of this table indicates that the RSRQ of the reception points belonging to the group A is greater than the RSRQ of the reception points belonging to the group B. It may be assumed that greater RSRQ corresponds to greater RSRQ between the central TRP and the UE than between the reception point and the UE, leading to a greater additional factor S.

<<Reception Point Group Determination Method 1-4>>

The reception point groups may be determined by using a signal-to-noise and interference ratio (for example, SINR). The UE may use the SINR to determine the reception point group to which each reception point belongs. The UE may measure the SINR by using the RS from the reception point (for example, the SSB, CSI-RS, pathloss reference RS, and so on). The SINR may be at least one of the SS-SINR based on the SSB and the CSI-SINR based on the CSI-RS. The UE may use the SINR to determine the reception point group and the additional factor S.

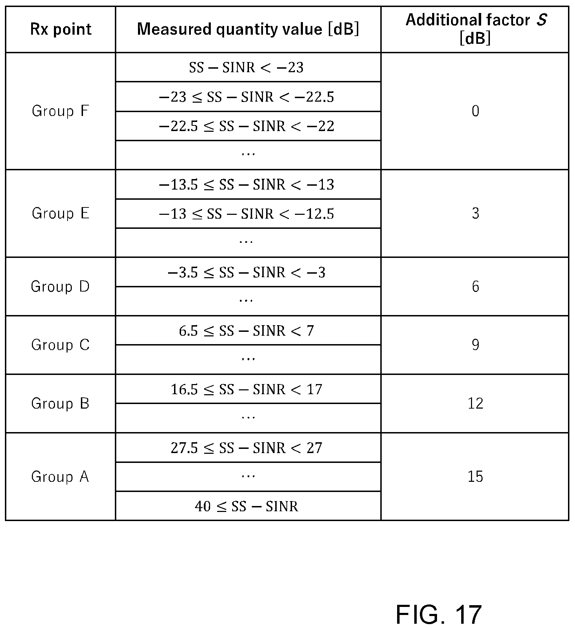

The reception point groups may be defined in the specifications. For example, as shown in FIG. 17, the association (for example, a table) between the reception point groups (groups A to F) and the range of the SINR and the additional factor S may be defined in the specifications. In this case, as shown in FIG. 16, the groups A to F may be determined. The number of reception point groups is not limited to six and may be an integer greater than one.

The example of this table indicates that the SINR of the reception points belonging to the group A is greater than the SINR of the reception points belonging to the group B. It may be assumed that greater SINR corresponds to greater SINR between the central TRP and the UE than between the reception point and the UE, leading to a greater additional factor S.

<<Reception Point Group Determination Method 1-5>>

The reception point groups may be determined by the NW. The UE may be notified of the reception point groups (the reception point groups may be configured or activated or indicated by at least one of higher layer signaling, MAC CE, and DCI).

The higher layer parameter may be replaced with an Rx point (for example, rxPoint), an Rx point group (for example, rxPointGroup), a reception point (for example, receptionPoint), a reception point group (for example, receptionPointGroup), and so on.

In a case of being notified of no reception point groups, the UE need not assume the additional factor S (the additional factor S need not be used for transmission power control).

The association (for example, a table or an equation) between at least two of the reception point group, the range of the distance $D_i$ between the central TRP and the reception point, the additional factor S, the type of the additional factor S, and a power class may be defined in the specifications or configured through higher layer signaling.

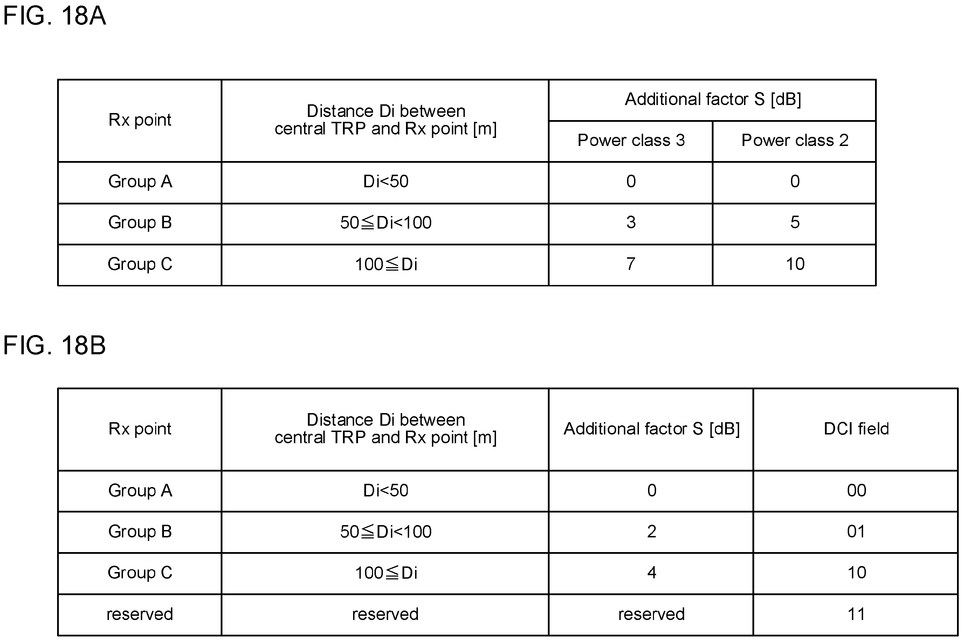

For example, as shown in FIG. 18A, the association among the reception point group, the range of the distance $D_i$, the power class, and the additional factor S may be defined in the specifications. The UE may determine the corresponding additional factor S based on the power class and the reception point groups notified.

For example, as shown in FIG. 18B, the association between the reception point group and the range of the distance $D_i$ and the additional factor S may be defined in the specifications. The UE may determine the corresponding additional factor S based on the reception point groups notified.

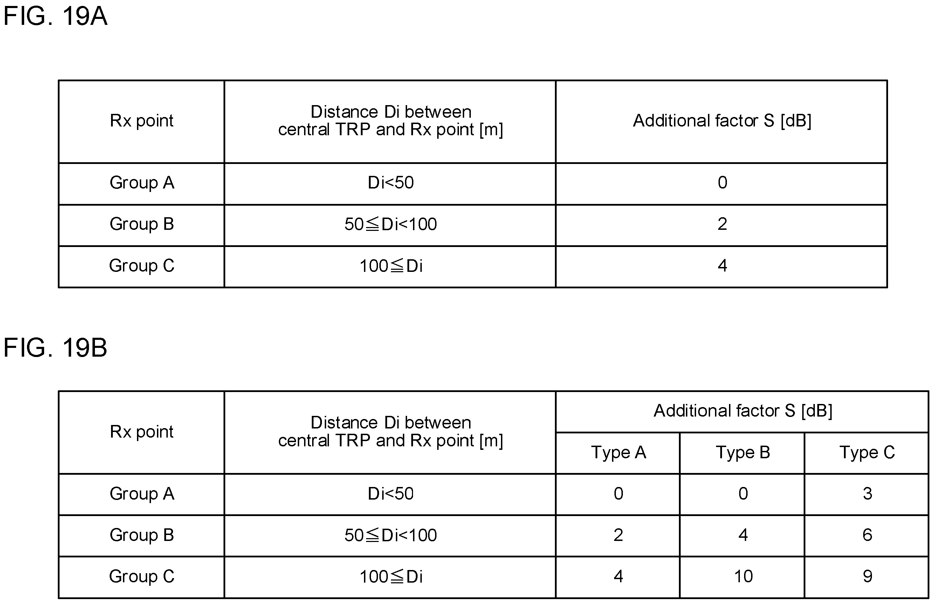

For example, as shown in FIG. 19A, the association among the reception point group, the range of the distance $D_i$, the additional factor S, and a DCI field value may be defined in the specifications. The UE may determine the corresponding reception point group and the additional factor S based on the value of the particular field in the DCI.

For example, as shown in FIG. 19B, the association among the reception point group, the range of the distance $D_i$, the type, and the additional factor S may be defined in the specifications. The UE may be notified of the type (the type may be configured for the UE or indicated to the UE). The UE may determine the corresponding additional factor S based on the reception point groups notified and the type notified.

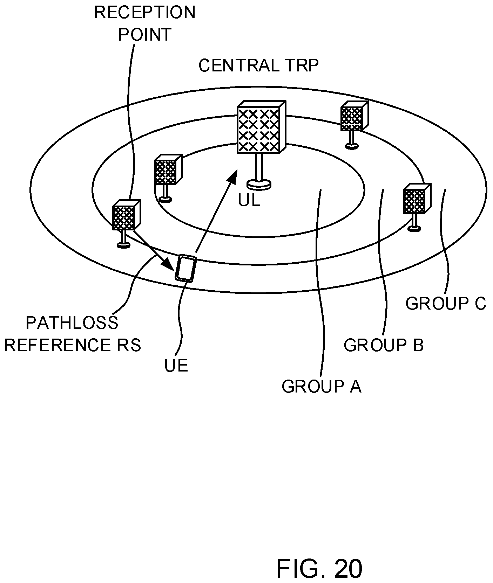

According to the example in FIG. 19A, the groups A, B, C may be determined as shown in FIG. 20. The distance $D_i$ of the reception points belonging to the group C is longer than the distance $D_i$ of the reception points belonging to the group B. It may be assumed that a longer distance $D_i$ corresponds to a greater pathloss between the central TRP and the UE than between the reception point and the UE, leading to a greater additional factor S.

The number of reception point groups is not limited to three and may be two or greater than three.

<<Reception Point Group Determination Method 1-6>>

The reception point groups may be determined by the NW. The UE may be notified of the reception point groups (the reception point groups may be configured or activated or indicated by at least one of higher layer signaling, MAC CE, and DCI).

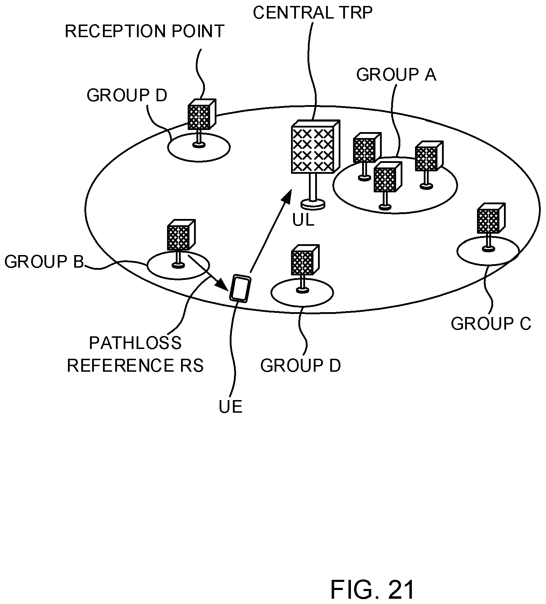

The NW (for example, the central TRP) may group the reception points. As shown in FIG. 21, the NW may group optional reception points. For example, the NW may group reception points located close to one another or reception points located close to the UE.

The association (for example, a table or an equation) between at least two of the reception point group, the additional factor S, and the DCI field value may be defined in the specifications or configured through higher layer signaling.

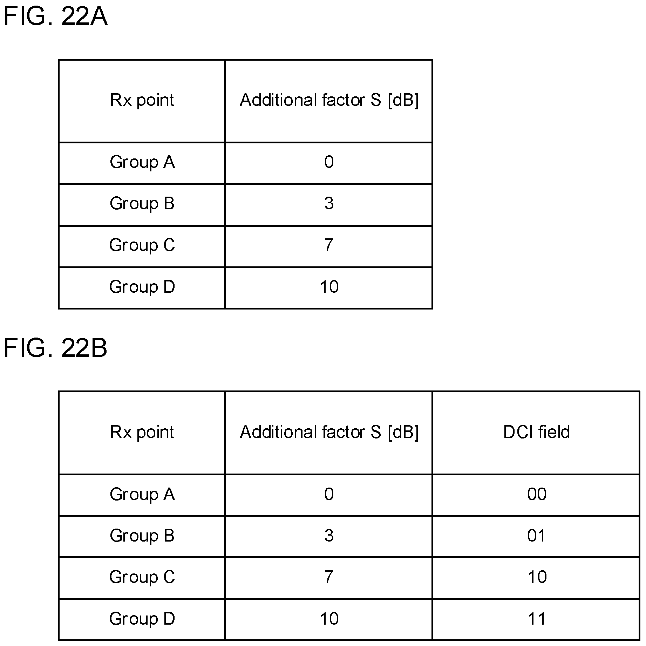

For example, as shown in FIG. 22A, the association between the reception point group and the range of the distance $D_i$ and the additional factor S may be defined in the specifications. The UE may determine the corresponding additional factor S based on the reception point groups notified.

For example, as shown in FIG. 22B, the association between the reception point group and the additional factor S and the DCI field value may be defined in the specifications. The UE may determine the corresponding additional factor S based on the value of the particular field in the DCI.

These reception point group determination methods can correct pathloss measured by the pathloss reference RS from the reception point.

According to the embodiment, the transmission power for the particular UL signal to the reception point or the central TRP can be appropriately determined based on the pathloss reference RS from the reception point.

<Embodiment 2>

The central TRP may transmit the pathloss reference RS. The UE may receive the pathloss reference RS from the central TRP. The reception point need not transmit the pathloss reference RS. The UE may assume that the pathloss reference RS is not transmitted from the reception point.

<<TRP Mode Recognition Method 2>>

As shown in FIG. 2 described above, in a case where X SRS resource sets (for example, SRS-ResourceSets) with particular usages are configured, the UE may assume the distributed TRP mode. The particular usage may be codebook transmission or noncodebook transmission. X may be greater than 1. For example, X may be 2. X may be defined in specifications.

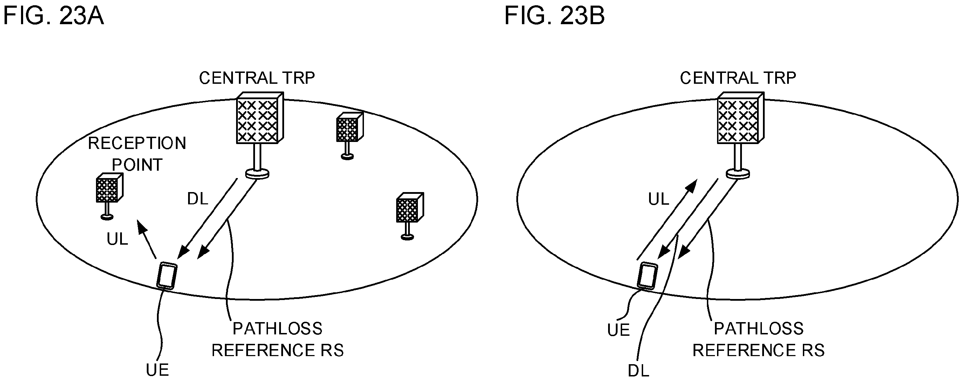

For example, in a case of being configured with two SRS resource sets with the usage for a codebook, the UE may assume the distributed TRP mode. In the distributed TRP mode, as shown in FIG. 23A, the UE may receive the pathloss reference RS from the central TRP, use the pathloss reference RS to estimate the pathloss between the UE and the reception point, determine the transmission power for the particular UL signal based on measurement results, and transmit the particular UL signal to the reception point. The UE may receive the DL signal from the central TRP (DL control information and DL data, for example, the PDCCH and the PDSCH).

Otherwise (in a case where X SRS resource sets with particular usages are not configured), the UE may assume that the transmission power for the particular UL signal is calculated in accordance with an existing equation using the RS index $q_d$ (for example, Equation (1) or Equation (3) or Equation (5)). In this case, the UE may assume that the pathloss reference RS is transmitted from the central TRP (localized TRP mode may be assumed or it may be assumed that the pathloss reference RS is not transmitted from the reception point). As shown in FIG. 23B, in the localized TRP mode, the UE may receive the pathloss reference RS from the central TRP, use the pathloss reference RS to estimate the pathloss between the UE and the central TRP, determine the transmission power for the particular UL signal based on measurement results, and transmit the particular UL signal to the central TRP, as is the case with Rel. 15. The UE may receive the DL signal from the central TRP (DL control information and DL data, for example, the PDCCH and the PDSCH).

For example, in a case of being configured with one SRS resource sets with a particular usage, the UE may assume the localized TRP mode.

In a case where more than X SRS resource sets with particular usages are configured, the UE may assume the distributed TRP mode. For example, X may be 1 or more.

The UE may recognize the TRP mode through higher layer signaling. For example, the UE may recognize the TRP mode depending on whether the UE is configured with a higher layer parameter indicating the distributed TRP mode (e.g., distributedTRPMode).

This method allows the UE to appropriately estimate the pathloss between the UE and the central TRP.

<<Destination Recognition Method 2>>

In a case of being configured with a particular configuration, the UE may assume that spatial relation information (transmission beam) regarding the spatial relation between the UE and the central TRP is used to transmit a particular UL signal (the spatial relation ID of the spatial relation between the UE and the central TRP may be used for transmission of the particular UL signal).

Otherwise, the UE may assume that spatial relation information regarding the spatial relation between the UE and the reception point is used to transmit the particular UL signal (the spatial relation ID of the spatial relation between the UE and the reception point may be used for transmission of the particular UL signal).

[PUSCH or SRS]

In a case where the particular UL signal is the PUSCH or SRS, the particular configuration may be an SRS resource set (SRS-ResourceSet) having a particular SRS resource set ID (SRS-ResourceSetId) and having a particular usage. The particular SRS resource set ID may be at least one of an even number, an odd number, Y, 0, and 1.

The particular SRS resource set ID may be defined in the specifications or configured through higher layer signaling (the particular SRS resource set ID may be changed or switched). At least one Y may be configured through higher layer signaling.

One of the SRS resource sets that has a particular SRS resource set ID may include spatial relation information regarding the spatial relation between the UE and the central TRP. Those of the SRS resource sets which have SRS resource set IDs different from the particular SRS resource set ID may include spatial relation information regarding the spatial relation between the UE and the reception point.

For example, it is assumed that the particular usage is a codebook or a noncodebook and that the particular SRS resource set ID is an even number and that the UE is configured with two SRS resource sets #0, #1 with the usage for a codebook as shown in FIG. 4 described above. The UE may recognize the distributed TRP mode in a case where the number of SRS resource sets configured is greater than 1.

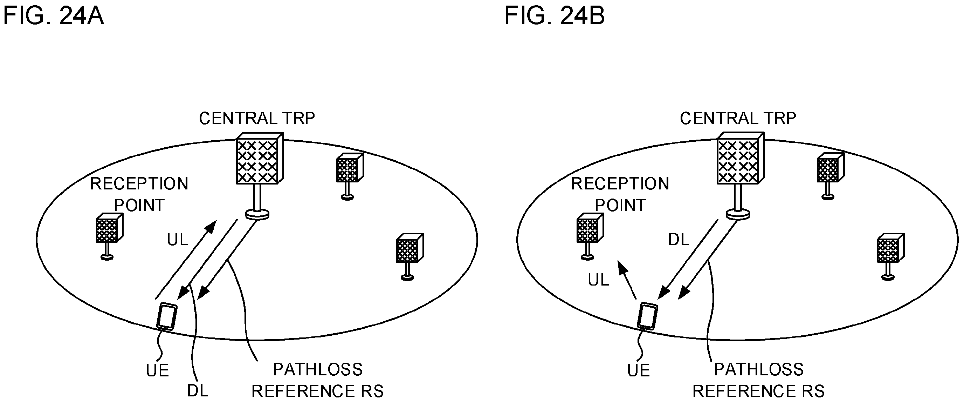

SRS resource set #0 indicates a transmission beam (spatial relation) between the UE and the central TRP. As shown in FIG. 24A, the UE uses the transmission beam based on SRS resource set #0 to transmit the particular UL signal (PUSCH or SRS) to the central TRP. SRS resource set #1 indicates a transmission beam (spatial relation) between the UE and the reception point. As shown in FIG. 24B, the UE uses the transmission beam based on SRS resource set #1 to transmit the particular UL signal (PUSCH or SRS) to the reception point. In both FIG. 24A and FIG. 24B, the UE may determine the transmission power for the particular UL signal (PUSCH or SRS) based on the pathloss reference RS from the reception point.

[PUCCH]

In a case where the particular UL signal is the PUCCH, the particular configuration may be PUCCH spatial relation information (PUCCH-SpatialRelationInfo) including a particular PUCCH spatial relation information ID (PUCCH-SpatialRelationInfoId). The particular PUCCH spatial relation information ID may be at least one of an even number, an odd number, Y, 0, and 1.

The particular PUCCH spatial relation information ID may be defined in the specifications or configured through higher layer signaling (the particular PUCCH spatial relation information ID may be changed or switched). At least one Y may be configured through higher layer signaling.

The PUCCH spatial relation information including the particular PUCCH spatial relation information ID may include the spatial relation information regarding the spatial relation between the UE and the central TRP. The PUCCH spatial relation information including a PUCCH spatial relation information ID different from the particular PUCCH spatial relation information ID may include the spatial relation information regarding the spatial relation between the UE and the reception point.

For example, it is assumed that the particular PUCCH spatial relation information ID is an even number and that as shown in FIG. 6, the UE is configured with two pieces of PUCCH spatial relation information #0, #1. The UE may recognize the distributed TRP mode in a case where the number of pieces of PUCCH spatial relation information configured is greater than 1.

PUCCH spatial relation information #0 indicates a transmission beam (spatial relation) between the UE and the central TRP. As shown in FIG. 24A, the UE uses the transmission beam based on PUCCH spatial relation information #0 to transmit the particular UL signal (PUCCH) to the central TRP. PUCCH spatial relation information #1 indicates a transmission beam (spatial relation) between the UE and the reception point. As shown in FIG. 24B, the UE uses the transmission beam based on PUCCH spatial relation information #1 to transmit the particular UL signal (PUCCH) to the reception point. In both FIG. 24A and FIG. 24B, the UE may determine the transmission power for the particular UL signal (PUCCH) based on the pathloss reference RS from the central reception TRP.

According to this method, the UE can appropriately recognize the destination of the particular UL signal.

<<Transmission Power Control Method 2>>

The UE may determine the transmission power for the particular UL signal in accordance with at least one of transmission power control methods 2-1 and 2-2 described below.

<<Transmission Power Control Method 2-1>>

In a case of transmitting the particular UL signal to the reception point, the UE may assume that the additional factor (additional state) D is notified to the UE (the UE may be notified of the additional factor D). For example, the UE may transmit the particular UL signal to the central TRP in a case where the UE includes a particular SRS resource set ID and is configured with no SRS resource set with a particular usage.

The UE may calculate the transmission power to the reception point by adding the additional factor D to the transmission power based on the pathloss between the central TRP and the UE (pathloss reference RS from the central TRP).

In a case where the particular UL signal is the PUSCH, the UE may determine the transmission power for the particular UL signal by using Equation (7) described above and including D.

In a case where the particular UL signal is the PUCCH, the UE may determine the transmission power for the particular UL signal by using Equation (8) described above and including D.

In a case where the particular UL signal is the SRS, the UE may determine the transmission power for the particular UL signal by using Equation (9) described above and including D.

The additional factor D may be configured by the higher layer parameter (for example, additionalStateD). The value of additionalStateD may be any one of {dB2, dB4, dB6, dB8} ({-2, -4, -6, -8} [dB] ) .

The additional factor D may be activated or indicated by the MAC-CE or DCI.

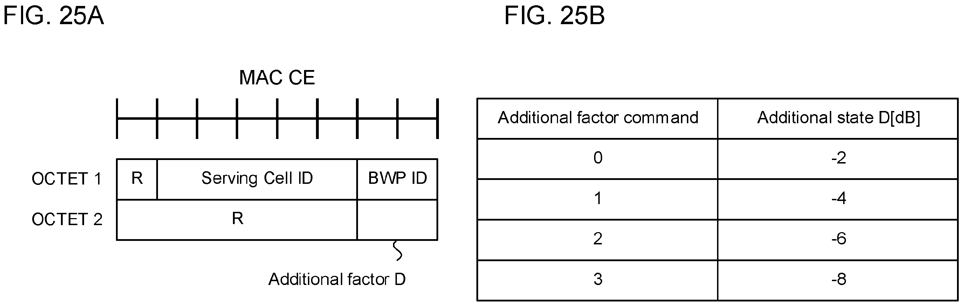

For example, as shown in FIG. 25A, an activation MAC CE for the additional factor D may include a 2-bit additional factor D field. The values of 00, 01, 10, 11 in the field may respectively indicate the values of 0, -2, -4, -6 [dB] for the additional factor D.

For example, as shown in FIG. 25B, the DCI may include an additional factor command field indicating the additional factor D. The values of 0, 1, 2, 3 in the additional factor command field (for example, 2 bits) may respectively indicate the values of 0, 2, -4, -6 [dB] for the additional factor D. The size of the additional factor command field in this example may be 2 bits.

In a case where the additional factor D is not provided, the UE may assume that the value of D is 0.

According to this method, the NW can directly control the transmission power for the particular UL signal.

<<Transmission Power Control Method 2-2>>

In a case of transmitting the particular UL signal to the reception point, the UE may assume the additional factor S for power control for the particular UL signal to adjust a pathloss gap between the central TRP and the reception point. Otherwise, the UE need not assume the additional factor S.

The UE may calculate the transmission power to the reception point by adding the additional factor S to the transmission power based on the pathloss between the central TRP and the UE (pathloss reference RS from the central TRP).

In a case where the particular UL signal is the PUSCH, the UE may determine the transmission power for the particular UL signal by using Equation (10) described above and including S.

In a case where the particular UL signal is the PUCCH, the UE may determine the transmission power for the particular UL signal by using Equation (11) described above and including S.

In a case where the particular UL signal is the SRS, the UE may determine the transmission power for the particular UL signal by using Equation (12) described above and including S.

The UE may determine S in accordance with any one of additional factor S determination methods 1 to 3 described below.

[Additional Factor S Determination Method 1]

The UE may assume that the value of S is determined by the reception point group to which the UE belongs (the value of S may be determined by the reception point group to which the UE belongs). The reception point group may be determined in accordance with the reception point group determination method described below.

[Additional Factor S Determination Method 2]

The UE may assume that the value of S is calculated by using a particular equation (the value of S may be calculated by using a particular equation). The particular equation may be, for example, the following equation including pathloss.

$$S = \text{floor}(10 * PL_{b,f,c}(q_d)/10) \text{ [dB]}$$

[Additional Factor S Determination Method 3]

Additional factor S determination methods 1 and 2 may be combined. For example, as shown in FIG. 8, a table indicating association between groups of reception points (reception point groups) and β may be defined in the specifications. The reception point group to which the reception point belongs may be determined in accordance with reception point group determination method 2 described below. The UE may use this table to determine the value of β corresponding to the reception point group to which the UE belongs. The UE may calculate the value of S by using a particular equation and β. The particular equation may be, for example, the following equation including pathloss.

$$S = \text{floor}(\beta * PL_{b,f,c}(q_d)/\beta) \text{ [dB]}$$

The transmission power control method allows the UE to correct a difference in pathloss between the central TRP and the reception point.

<<Reception Point Group Determination Method 2>>

The reception points may be grouped. "Group" may be replaced with "category."

The UE may determine the transmission power for the particular UL signal in accordance with at least one of transmission power control methods 2-1 and 2-2 described below.

<<Reception Point Group Determination Method 2-1>>

The reception point groups may be determined by the NW. The UE may be notified of the reception point groups (the reception point groups may be configured or activated or indicated by at least one of higher layer signaling, MAC CE, and DCI).

In a case of being notified of no reception point groups, the UE need not assume the additional factor S (the additional factor S need not be used for transmission power control).

The association (for example, a table or an equation) between at least two of the reception point group, the distance $D_i$ between the central TRP and the reception point, the additional factor S, the type of the additional factor S, and the power class may be defined in the specifications or configured through higher layer signaling.

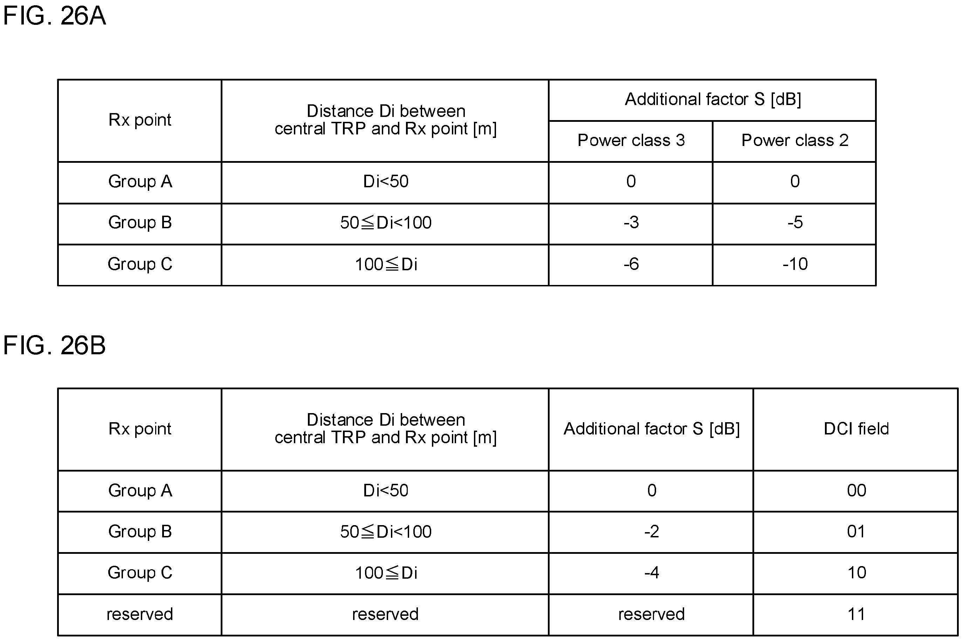

For example, as shown in FIG. 26A, the association among the reception point group, the distance $D_i$, the

power class, and the additional factor S may be defined in the specifications. The UE may determine the corresponding additional factor S based on the power class and the reception point groups notified.

For example, as shown in FIG. 26B, the association between the reception point group and the distance $D_i$ and the additional factor S may be defined in the specifications. The UE may determine the corresponding additional factor S based on the reception point groups notified.

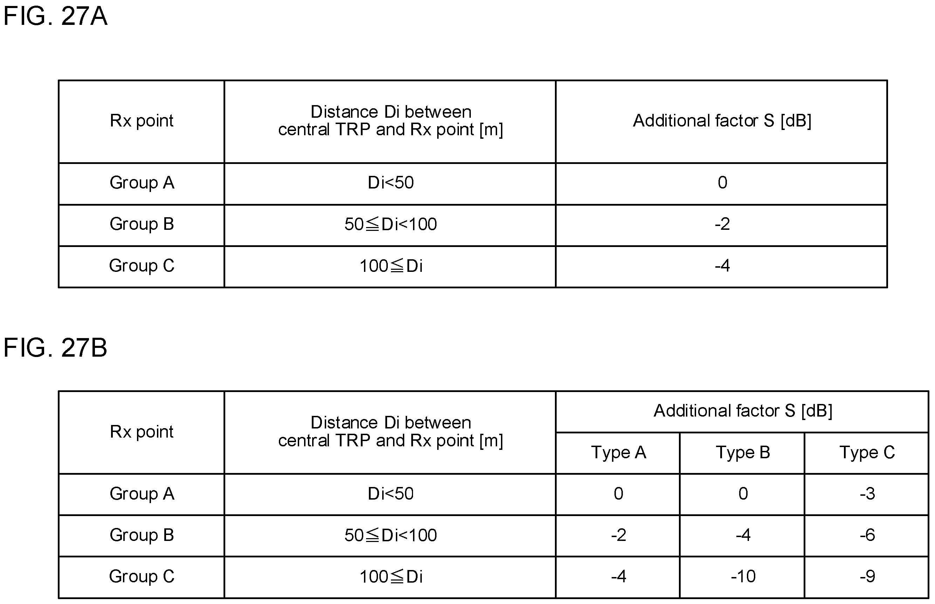

For example, as shown in FIG. 27A, the association among the reception point group, the distance $D_i$, the additional factor S, and the DCI field value may be defined in the specifications. The UE may determine the corresponding reception point group and the additional factor S based on the value of the particular field in the DCI.

For example, as shown in FIG. 27B, the association among the reception point group, the distance $D_i$, the type, and the additional factor S may be defined in the specifications. The UE may be notified of the type (the type may be configured for the UE or indicated to the UE). The UE may determine the corresponding additional factor S based on the reception point groups notified and the type notified.

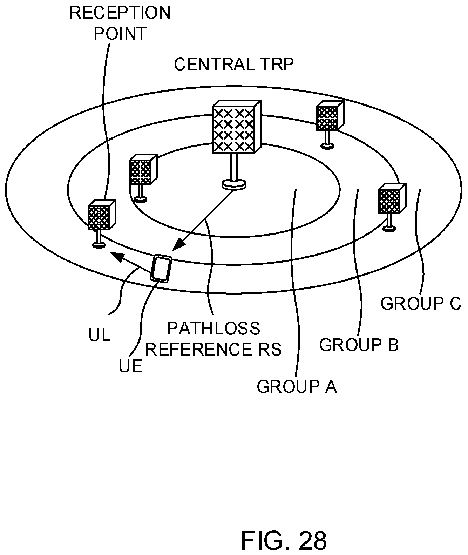

According to the example in FIG. 27A, the groups A, B, C may be determined as shown in FIG. 28. The distance $D_i$ of the reception points belonging to the group C is longer than the distance $D_i$ of the reception points belonging to the group B. It may be assumed that a longer distance $D_i$ corresponds to a greater pathloss between the central TRP and the UE than between the reception point and the UE, leading to a smaller additional factor S (a greater absolute value of the negative additional factor S).

The number of reception point groups is not limited to three and may be two or greater than three.

<<Reception Point Group Determination Method 2-2>>

The reception point groups may be determined by the NW. The UE may be notified of the reception point groups (the reception point groups may be configured or activated or indicated by at least one of higher layer signaling, MAC CE, and DCI).

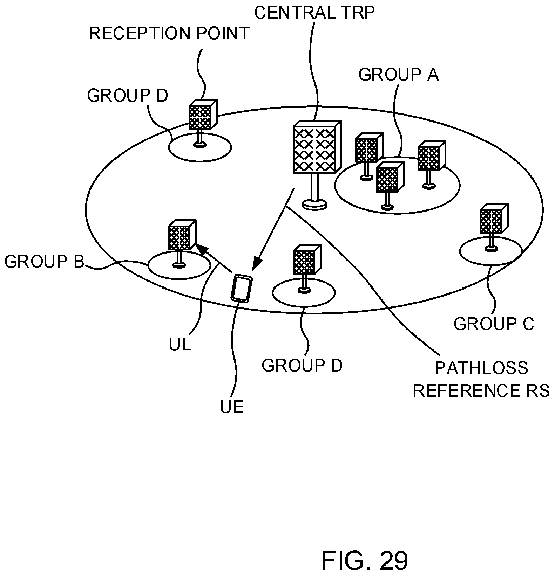

The NW (for example, the central TRP) may group the reception points. As shown in FIG. 29, the NW may group optional reception points. For example, the NW may group reception points located close to one another or reception points located close to the UE.

The association (for example, a table or an equation) between at least two of the reception point group, the additional factor S, and the DCI field value may be defined in the specifications or configured through higher layer signaling.

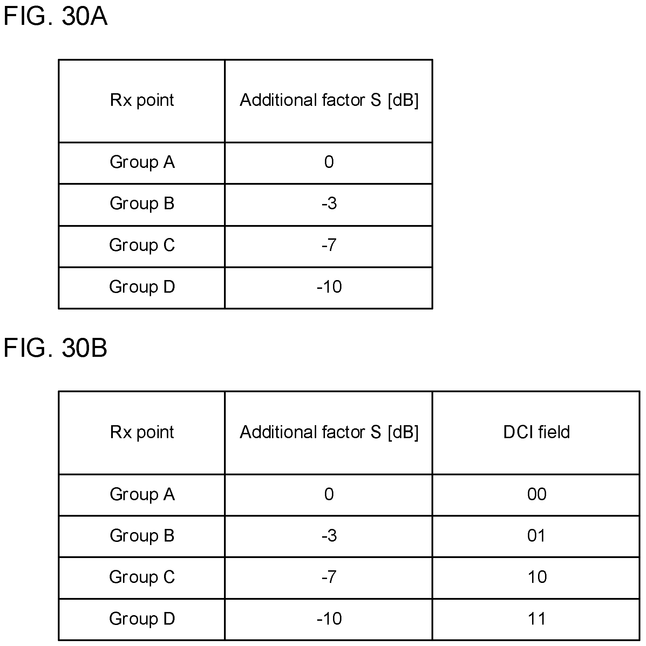

For example, as shown in FIG. 30A, the association between the reception point group and the additional factor S may be defined in the specifications. The UE may determine the corresponding additional factor S based on the reception point groups notified.

For example, as shown in FIG. 30B, the association between the reception point group and the additional factor S and the DCI field value may be defined in the specifications. The UE may determine the corresponding additional factor S based on the value of the particular field in the DCI.

These reception point group determination methods can correct pathloss measured by the pathloss reference RS from the central

TRP.

According to the embodiment, the transmission power for the particular UL signal to the reception point or the central TRP can be appropriately determined based on the pathloss reference RS from the central TRP.

<Embodiment 3>

The transmission point (source) of the pathloss reference RS may be switched.

<<RS Source Determination Method>>

The UE may be explicitly or implicitly notified of a source of the pathloss reference RS.

The UE may assume that the source of the pathloss reference RS is configured by using the higher layer parameter (the source of the pathloss reference RS may be configured by using the higher layer parameter). The higher layer parameter may be replaced with a pathloss reference RS setting (for example, pathlossReference RsSetting), a pathloss reference RS configuration (for example, pathlossReferenceRsConfig), a pathloss reference RS mode (for example, pathlossReferenceRsMode), and so on.

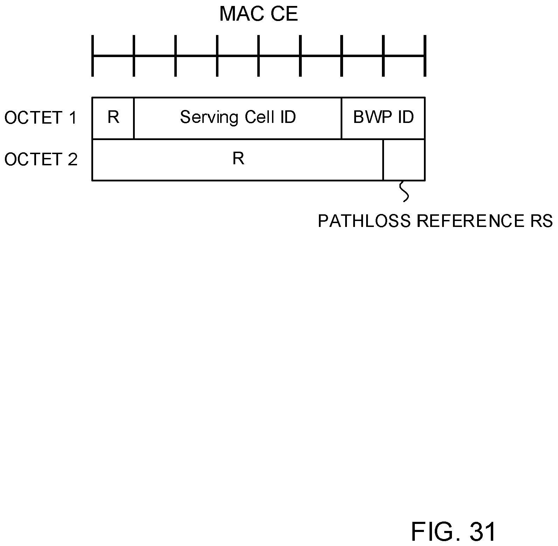

The UE may assume that the source of the pathloss reference RS is indicated by using the MAC CE (the source of the pathloss reference RS may be configured by using the MAC CE). As shown in FIG. 31, the MAC CE may include a pathloss reference RS field.

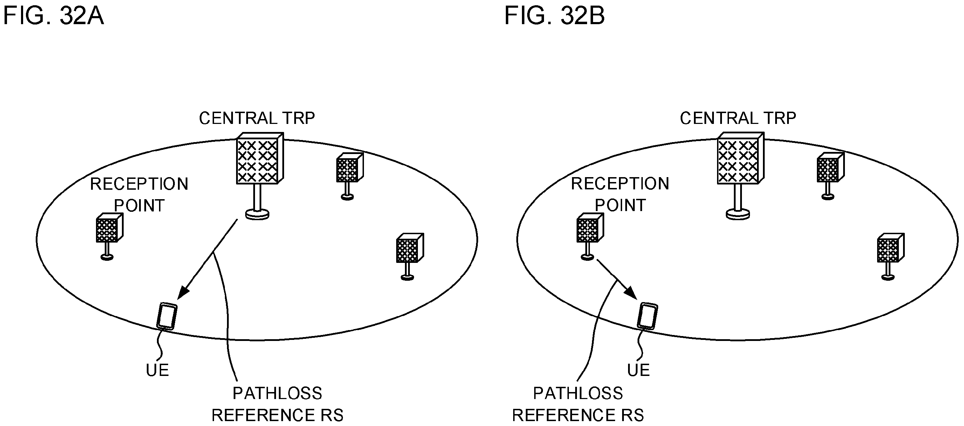

In a case where the pathloss reference RS field is set to 0, the UE may assume that the pathloss reference RS is transmitted from the central TRP as shown in FIG. 32A. In a case where the pathloss reference RS field is set to 1, the UE may assume that the pathloss reference RS is transmitted from the reception point as shown in FIG. 32B.

As shown in FIG. 2 described above, in a case where X SRS resource sets (for example, SRS-ResourceSets) with particular usages are configured, the UE may assume that the pathloss reference RS is transmitted from the reception point (the pathloss reference RS may be received from the reception point. In this case, the UE may assume the distributed TRP mode. The particular usage may be codebook transmission or noncodebook transmission. X may be larger than 1. For example, X may be 2. X may be defined in specifications.

For example, in a case of being configured with two SRS resource sets with the particular usage for a codebook, the UE may assume the distributed TRP mode. In the distributed TRP mode, as shown in FIG. 32B described above, the UE may receive the pathloss reference RS from the reception point, use the pathloss reference RS to estimate the pathloss between the UE and the reception point, determine the transmission power for the particular UL signal based on measurement results, and transmit the particular UL signal to the reception point. The UE may receive the DL signal from the central TRP (DL control information and DL data, for example, the PDCCH and the PDSCH).

Otherwise (in a case where X SRS resource sets with particular usages are not configured), the UE may assume that the transmission power for the particular UL signal is calculated in accordance with an existing equation using the RS index $q_d$ (for example, Equation (1) or Equation (3) or Equation (5) described above). In this case, the UE may assume that the pathloss reference RS is transmitted from the central TRP (localized TRP mode may be assumed or it may be assumed that the pathloss reference RS is not transmitted from the reception point). As shown in FIG. 32A, in the localized TRP mode, the UE may receive the pathloss reference RS from the central TRP, use the pathloss reference RS to estimate the pathloss between the UE and the central TRP, determine the transmission power for the particular UL signal based on measurement results, and transmit the particular UL signal to the central TRP, as is the case with Rel. 15. The UE may receive the DL signal from the central TRP (DL control information and DL data, for example, the PDCCH and the PDSCH).

For example, in a case of being configured with one SRS resource sets with a particular usage, the UE may assume the localized TRP mode.

In a case where more than X SRS resource sets with particular usages are configured, the UE may assume the distributed TRP mode and assume that the pathloss reference RS is transmitted from the reference point. For example, X may be 1 or more.

The UE may recognize the TRP mode through higher layer signaling. For example, the UE may recognize the TRP mode depending on whether the UE is configured with a higher layer parameter indicating the distributed TRP mode (e.g., distributedTRPMode).

This method allows the UE to appropriately estimate the pathloss between the UE and the reception point.

<<Transmission Power Control Method 3>>

The UE may assume that the power control adjustment state (accumulated value) for closed loop power control is accumulated regardless of whether the destination is the central TRP or the reception point.

The UE may determine the transmission power for the particular UL signal in accordance with at least one of transmission power control methods 3-1 and 3-3 described below.

<<Transmission Power Control Method 3-1>>

In a case where X SRS resource sets (for example, SRS-ResourceSets) with particular usages are configured, the UE may assume that $\Sigma_{m=0}^{C(Di)-1}\delta_{PUSCH,b,f,c}(m,l)$ in the PUSCH power control adjustment state (Equation 2 described above) is the total of TPC commands.

As shown in FIG. 2 described above, in a case where X SRS resource sets (for example, SRS-ResourceSets) with particular usages are configured, the UE may assume that $\Sigma_{m=0}^{C(Di)-1}\delta_{PUCCH,b,f,c}(m,l)$ in the PUCCH power control adjustment state (Equation 4 described above) is the total of TPC commands.

In a case where X SRS resource sets (for example, SRS-ResourceSets) with particular usages are configured, the UE may assume that $\Sigma_{m=0}^{C(Di)-1}\delta_{SRS,b,f,c}(m,l)$ in the SRS power control adjustment state (Equation 6 described above) is the total of TPC commands.

The particular usage may be codebook transmission or noncodebook transmission. X may be greater than 1.

<<Transmission Power Control Method 3-2>>

In a case where X SRS resource sets (for example, SRS-ResourceSets) with particular usages are configured, the UE may assume that $\Sigma_{m=0}^{C(Di)-1}\delta_{PUSCH,b,f,c}(m,l)$ in the PUSCH power control adjustment state (Equation 2 described above) is the total of TPC commands in the same transmission beam. Otherwise, the UE may assume that $\Sigma_{m=0}^{C(Di)-1}\delta_{PUSCH,b,f,c}(m,l)$ is the total of TPC commands.

In a case where X SRS resource sets (for example, SRS-ResourceSets) with particular usages are configured, the UE may assume that $\Sigma_{m=0}^{C(Ci)-1}\delta_{PUSCH,b,f,c}(m,l)$ in the PUCCH power control adjustment state (Equation 4 described above) is the total of TPC commands in the same transmission beam. Otherwise, the UE may assume that $\Sigma_{m=0}^{C(Ci)-1}\delta_{PUSCH,b,f,c}(m,l)$ is the total of TPC commands.

In a case where X SRS resource sets (for example, SRS-ResourceSets) with particular usages are configured, the UE may assume that $\Sigma_{m=0}^{C(Ci)-1}\delta_{PUSCH,b,f,c}(m,l)$ in the SRS power control adjustment state (Equation 6 described above) is the total of TPC commands in the same transmission beam. Otherwise, the UE may assume that $\Sigma_{m=0}^{C(Ci)-1}\delta_{PUSCH,b,f,c}(m,l)$ is the total of TPC commands.

X may be greater than 1. X may be defined in specifications. For example, X may be 2.

The same transmission beam may be replaced with the same SRI in the SRS configuration information (for example, SRS-Config), the same spatial relation, and so on.

In a case where X SRS resource sets (for example, SRS-ResourceSets) with particular usages are configured, the UE may assume that $\Sigma_{m=0}^{C(Di)-1}\delta_{PUSCH,b,f,c}(m,l)$ in the PUSCH power control adjustment state (Equation 2 described above) is the total of TPC commands within the same SRS resource set.

In a case where X SRS resource sets (for example, SRS-ResourceSets) with particular usages are configured, the UE may assume that $\Sigma_{m=0}^{C(Ci)-1}\delta_{PUCCH,b,f,c}(m,l)$ in the PUCCH power control adjustment state (Equation 4 described above) is the total of TPC commands within the same SRS resource set.

In a case where X SRS resource sets (for example, SRS-ResourceSets) with particular usages are configured, the UE may assume that $\Sigma_{m=0}^{C(Si)-1}\delta_{SRS,b,f,c}(m)$ in the SRS power control adjustment state (Equation 6 described above) is the total of TPC commands within the same SRS resource set.

According to transmission power control method 1 or 2, the UE can appropriately perform closed loop power control.

<<Transmission Power Control Method 3-3>>

In a case of being configured with the distributed TRP mode, the UE need not assume the closed loop power control.

[[PUSCH]]

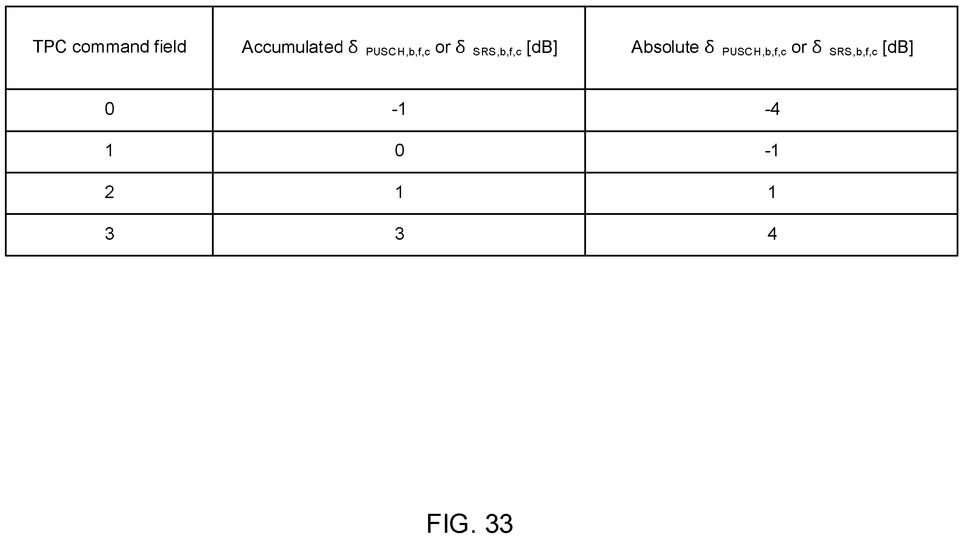

In a case of being configured with the distributed TRP mode, the UE may assume a PUSCH power control adjustment state $f_{b,f,c}(i,l) = \delta_{PUSCH,b,f,c}(i,l)$. $\delta_{PUSCH,b,f,c}(i,l)$ may be a TPC command value corresponding to a TPC command field value in DCI format 0_0, 0_1, or 2_2 based on the association between the TPC command field value and the TPC command value (for example, a table in FIG. 33). $\delta_{PUSCH,b,f,c}(i,l)$ may be a TPC command value indicated by one TPC command (a non-accumulated value, an absolute value, a non-relative value, an absolute amount).

[[SRS]]

In a case of being configured with the distributed TRP mode, the UE may assume an SRS power control adjustment state $h_{b,f,c}(i) = \delta_{SRS,b,f,c}(i)$. $\delta_{SRS,b,f,c}(i,l)$ may be a TPC command value corresponding to a TPC command field value in DCI format 2_3 based on the association between the TPC command field value and the TPC command value (for example, the table in FIG. 33). $\delta_{SRS,b,f,c}(i)$ may be a TPC command value indicated by one TPC command (a non-accumulated value, an absolute value, a non-relative value, an absolute amount).

According to transmission power control methods, the UE can appropriately perform the closed loop power control on the reception point or the central TRP.

According to the embodiment, the source of the pathloss reference RS can be switched, allowing the UE to appropriately recognize the source of the pathloss reference RS.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

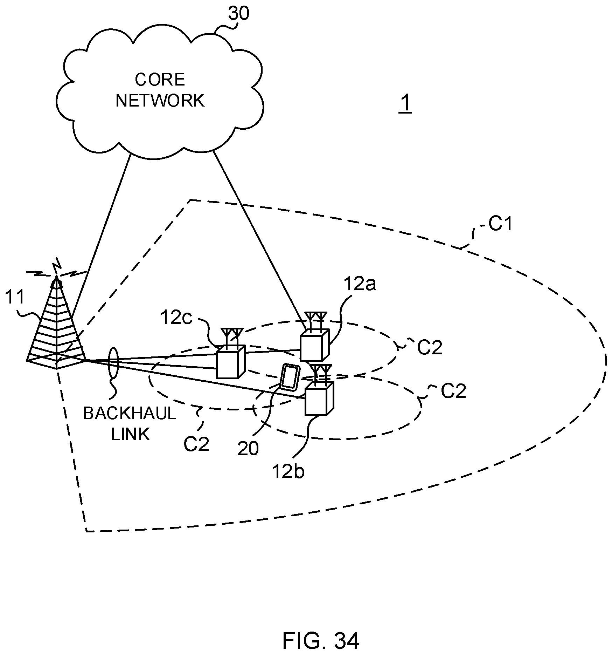

FIG. 34 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information is communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on are communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

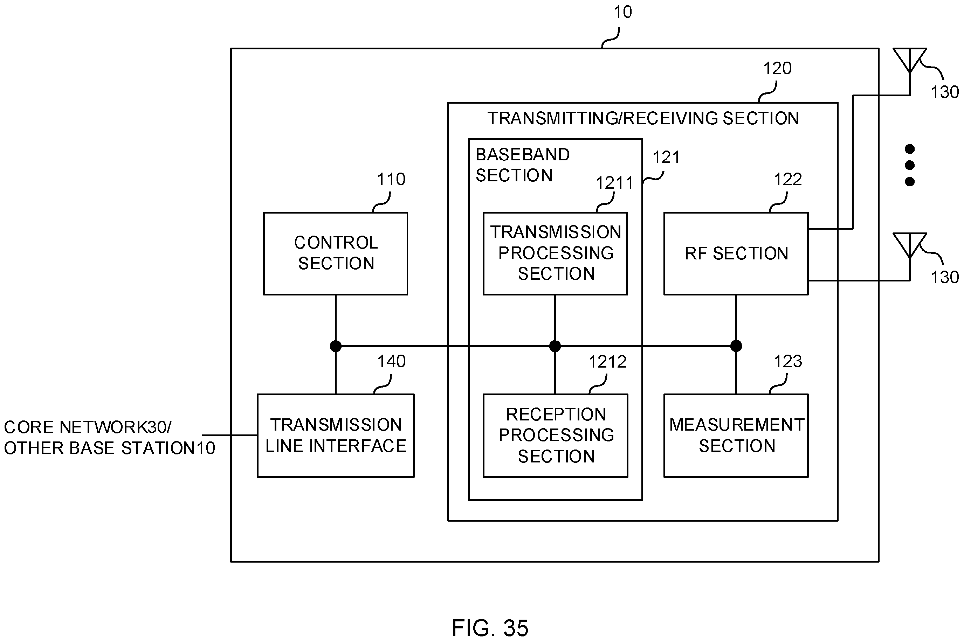

FIG. 35 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interface s 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmission beam and a reception beam by using digital beam foaming (for example, precoding), analog beam foaming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit reference signals (for example, the SSB, CSI-RS, and so on). The transmitting/receiving section 120 may transmit information indicating a TCI state for particular DL transmission (MAC CE or DCI). The TCI state may indicate at least one of the reference signal (for example, the SSB, CSI-RS, or the like), a QCL type, and the cell in which the reference signal is transmitted. The TCI state may indicate one or more reference signals. The one or more reference signals may include a reference signal with a QCL type A or a reference signal with a QCL type D.

The control section 110 may assume that a first reference signal for a spatial relation of particular uplink transmission (for example, the SRS, PUCCH, PUSCH, or the like) is a second reference signal (for example, SSB, CSI-RS) with the QCL type D in a transmission control indication (TCI) state or a quasi co-location (QCL) assumption of a particular downlink channel (for example, the PDCCH, PDSCH, or the like).

(User Terminal)

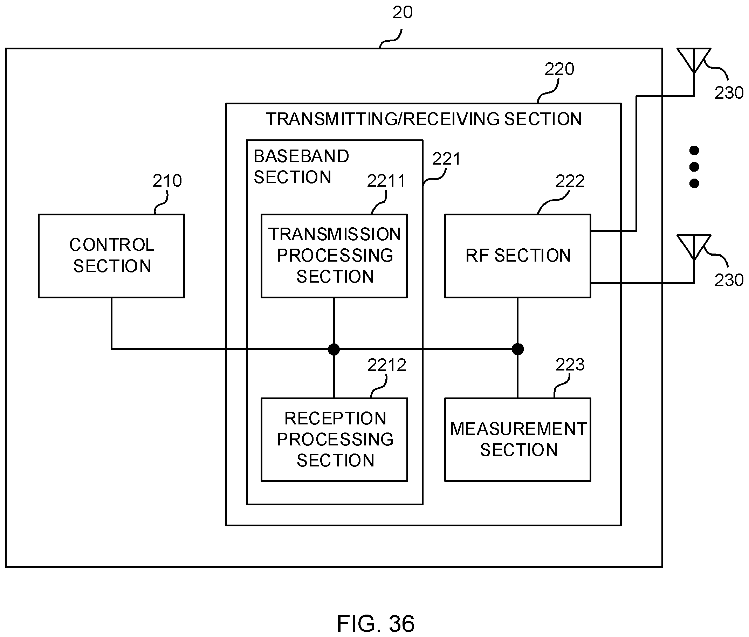

FIG. 36 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmission beam and a reception beam by using digital beam foaming (for example, precoding), analog beam foaming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive the reference signal for pathloss reference (pathloss reference RS) from one of a first point that transmits downlink data (for example, the central TRP) and a second point that transmits no downlink data (for example, the reception point). The control section 210 may control the transmission power for the physical uplink shared channel (PUSCH) to the second point based on the reference signal for pathloss reference.

Based on the sounding reference signal (SRS) resource set, the control section 210 may determine to which of the first point and the second point the PUSCH is to be transmitted.

Based on the reference signal for pathloss reference from one of the first point and the second point and a correction value, the control section 210 may determine the transmission power for the PUSCH to the other of the first point and the second point.

The transmitting/receiving section 220 may receive the reference signal for pathloss reference (pathloss reference RS) from one of a first point that transmits downlink data (for example, the central TRP) and a second point that does not transmit downlink data (for example, the reception point). The control section 210 may control the transmission power for the physical uplink shared channel (PUSCH) to the second point based on the reference signal for pathloss reference.

Based on the PUCCH spatial relation information, the control section 210 may determine to which of the first point and the second point the PUCCH is to be transmitted.

Based on the reference signal for pathloss reference from one of the first point and the second point and a correction value, the control section 210 may determine the transmission power for the PUCCH to the other of the first point and the second point.

The transmitting/receiving section 220 may receive the reference signal for pathloss reference (pathloss reference RS) from one of a first point that transmits downlink data (for example, the central TRP) and a second point that does not transmit downlink data (for example, the reception point). The control section 210 may control the transmission power for the sounding reference signal to the second point based on the reference signal for pathloss reference.

Based on the SRS resource set, the control section 210 may determine to which of the first point and the second point the SRS is to be transmitted.

Based on the reference signal for pathloss reference from one of the first point and the second point and a correction value, the control section 210 may determine the transmission power for the SRS to the other of the first point and the second point.

The control section 210 may determine the correction value based on at least one of a report from the first point, a group to which the second point belongs, and a measurement result for a signal from the second point.

Based on the report from the first point, the control section 210 may determine from which of the first point and the second point the reference signal for pathloss reference is to be transmitted.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

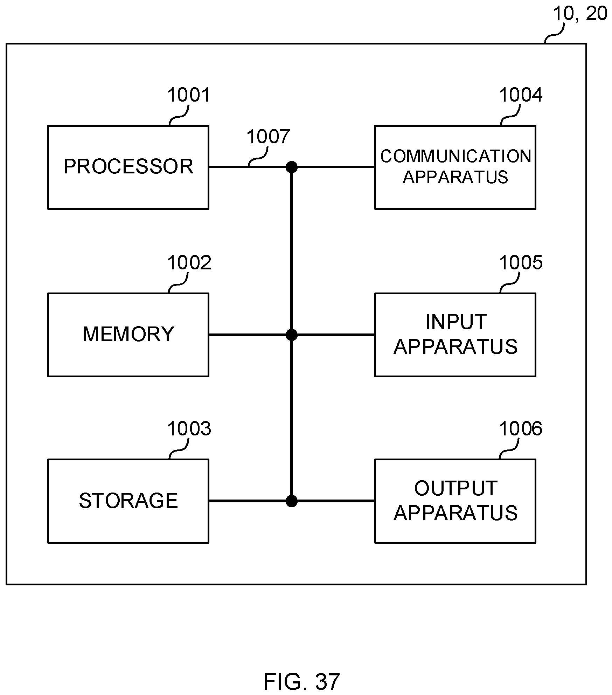

For example, a base station, a user terminal, and so on according to one embodiment of the present disclosure may function as a computer that executes the processes of the radio communication method of the present disclosure. FIG. 37 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit greater than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure are used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

   a receiving section that receives a reference signal for pathloss reference from one of a first point that transmits downlink data and a second point that transmits no downlink data; and
   a control section that controls transmission power for a physical uplink shared channel (PUSCH) to the second point based on the reference signal for pathloss reference.

2. The terminal according to claim 1, wherein
   based on a sounding reference signal (SRS) resource set, the control section determines to which of the first point and the second point the PUSCH is to be transmitted.

3. The terminal according to claim 1 or 2, wherein
   based on the reference signal for pathloss reference from one of the first point and the second point and a correction value, the control section determines the transmission power for the PUSCH to the other of the first point and the second point.

**4.** The terminal according to claim 3, wherein
the control section determines the correction value based on at least one of a report from the first point, a group to which the second point belongs, and a measurement result for a signal from the second point.

**5.** The terminal according to any one of claims 1 to 4, wherein
the control section determines, based on a report from the first point, whether the reference signal for pathloss reference is transmitted from the first point or the second point.

**6.** A radio communication method for a terminal, the radio communication method comprising:

receiving a reference signal for pathloss reference from one of a first point that transmits downlink data and a second point that transmits no downlink data, and
controlling transmission power for a physical uplink shared channel (PUSCH) to the second point based on the reference signal for pathloss reference.

FIG. 1A

GENERAL DEPLOYMENT

FIG. 1B

UL DENSE DEPLOYMENT

SRS RESOURCE ID

| SRS RESOURCE #0 |
| SRS RESOURCE #1 |
| SRS RESOURCE #2 |

⋮

SRS RESOURCE SET #0
(usage='codebook')

| SRS RESOURCE #0 |
| SRS RESOURCE #1 |
| SRS RESOURCE #2 |

⋮

SRS RESOURCE SET #1
(usage='codebook')

...

EP 4 021 056 A1

FIG. 2

# FIG. 3A

CENTRAL TRP

RECEPTION
POINT

UL

DL

PATHLOSS
REFERENCE RS

UE

# FIG. 3B

CENTRAL TRP

UL

UE

DL

PATHLOSS
REFERENCE RS

| SRS RESOURCE #0 | SRS RESOURCE #0 |
| SRS RESOURCE #1 | SRS RESOURCE #1 |
| SRS RESOURCE #2 | SRS RESOURCE #2 |

⋮ ⋮

SRS RESOURCE SET #0
(usage='codebook')

SRS RESOURCE SET #1
(usage='codebook')

↓ ↓

TRANSMISSION BEAM
BETWEEN UE AND
CENTRAL TRP

TRANSMISSION BEAM
BETWEEN UE AND
RECEPTION POINT

FIG. 4

FIG. 5A

CENTRAL TRP

RECEPTION POINT

UL

DL

PATHLOSS REFERENCE RS

UE

FIG. 5B

CENTRAL TRP

RECEPTION POINT

UL

DL

PATHLOSS REFERENCE RS

UE

EP 4 021 056 A1

| PUCCH SPATIAL RELATION INFORMATION #0 | PUCCH SPATIAL RELATION INFORMATION #1 |
|---|---|
| ↓ | ↓ |
| TRANSMISSION BEAM BETWEEN UE AND CENTRAL TRP | TRANSMISSION BEAM BETWEEN UE AND RECEPTION POINT |

FIG. 6

## FIG. 7B

| Additional factor command | Additional state D[dB] |
|---|---|
| 0 | 2 |
| 1 | 4 |
| 2 | 6 |
| 3 | 8 |

## FIG. 7A

MAC CE

| | | |
|---|---|---|
| R | Serving Cell ID | BWP ID |
| R | | |

OCTET 1
OCTET 2

Additional factor D

| Rx point | β |
|---|---|
| Group A | 9 |
| Group B | 6 |
| Group C | 3 |

FIG. 8

| Rx point | Downlink pathloss $PL_{b,f,c}(q_d)$ [dB] | Additional factor S [dB] |
|---|---|---|
| Group A | $PL_{b,f,c}(q_d)<95$ | 4 |
| Group B | $95\leqq PL_{b,f,c}(q_d)<120$ | 2 |
| Group C | $120\leqq PL_{b,f,c}(q_d)$ | 0 |

FIG. 9

FIG. 10

EP 4 021 056 A1

| Rx point | Measured quantity value (L3 SS-RSRP) [dBm] | Measured quantity value (L1 SS-RSRP and CSI-RSRP) [dBm] | Additional factor $S$ [dB] |
|---|---|---|---|
| Group B | $SS - RSRP < -156$ | Not valid | 5 |
| | $-156 \leq SS - RSRP < -155$ | Not valid | |
| | $-155 \leq SS - RSRP < -154$ | Not valid | |
| | ... | ... | |
| | $-142 \leq SS - RSRP < -141$ | Not valid | |
| | $-141 \leq SS - RSRP < -140$ | $RSRP < -140$ | |
| | $-140 \leq SS - RSRP < -139$ | $-140 \leq RSRP < -139$ | |
| | ... | ... | |
| | $-101 \leq SS - RSRP < -100$ | $-101 \leq RSRP < -100$ | |
| Group A | $-100 \leq SS - RSRP < -99$ | $-100 \leq RSRP < -99$ | 10 |
| | ... | ... | |
| | $-45 \leq SS - RSRP < -44$ | $-45 \leq RSRP < -44$ | |
| | $-44 \leq SS - RSRP < -43$ | $-44 \leq RSRP$ | |
| | $-43 \leq SS - RSRP < -42$ | Not valid | |
| | | ... | |
| | $-32 \leq SS - RSRP < -31$ | | |
| | $-31 \leq SS - RSRP$ | | |
| | Infinity | Infinity | |

FIG. 11

FIG. 12

| Rx point | Measured quantity value (L3 SS-RSRP) [dBm] | Measured quantity value (L1 SS-RSRP and CSI-RSRP) [dBm] | Additional factor $S$ [dB] |
|---|---|---|---|
| Group B | $SS - RSRP - CRE < -156$ | Not valid | 5 |
| | $-156 \leq SS - RSRP - CRE < -155$ | Not valid | |
| | $-155 \leq SS - RSRP - CRE < -154$ | Not valid | |
| | ... | ... | |
| | $-142 \leq SS - RSRP - CRE < -141$ | Not valid | |
| | $-141 \leq SS - RSRP - CRE < -140$ | $RSRP < -140$ | |
| | $-140 \leq SS - RSRP - CRE < -139$ | $-140 \leq RSRP < -139$ | |
| | ... | ... | |
| | $-101 \leq SS - RSRP - CRE < -100$ | $-101 \leq RSRP < -100$ | |
| Group A | $-100 \leq SS - RSRP - CRE < -99$ | $-100 \leq RSRP < -99$ | 10 |
| | ... | ... | |
| | $-45 \leq SS - RSRP - CRE < -44$ | $-45 \leq RSRP < -44$ | |
| | $-44 \leq SS - RSRP - CRE < -43$ | $-44 \leq RSRP$ | |
| | $-43 \leq SS - RSRP - CRE < -42$ | Not valid | |
| | ... | ... | |
| | $-32 \leq SS - RSRP - CRE < -31$ | | |
| | $-31 \leq SS - RSRP - CRE$ | | |
| | Infinity | Infinity | |

FIG. 13

EP 4 021 056 A1

FIG. 14

EP 4 021 056 A1

| Rx point | Measured quantity value [dB] | Additional factor $S$ [dB] |
|---|---|---|
| Group F | $SS - RSRQ < -43$ | 0 |
| | $-43 \leq SS - RSRQ < -42.5$ | |
| | $-42.5 \leq SS - RSRQ < -42$ | |
| | ... | |
| Group E | $-33.5 \leq SS - RSRQ < -33$ | 3 |
| | $-33 \leq SS - RSRQ < -32.5$ | |
| | ... | |
| Group D | $-23.5 \leq SS - RSRQ < -23$ | 6 |
| | ... | |
| Group C | $-13.5 \leq SS - RSRQ < -13$ | 9 |
| | ... | |
| Group B | $-3.5 \leq SS - RSRQ < -3$ | 12 |
| | ... | |
| Group A | $7.5 \leq SS - RSRQ < 7$ | 15 |
| | ... | |
| | $20 \leq SS - RSRQ$ | |

FIG. 15

FIG. 16

| Rx point | Measured quantity value [dB] | Additional factor $S$ [dB] |
|----------|------------------------------|---------------------------|
| Group F | $SS - SINR < -23$ | 0 |
|  | $-23 \leq SS - SINR < -22.5$ |  |
|  | $-22.5 \leq SS - SINR < -22$ |  |
|  | ... |  |
| Group E | $-13.5 \leq SS - SINR < -13$ | 3 |
|  | $-13 \leq SS - SINR < -12.5$ |  |
|  | ... |  |
| Group D | $-3.5 \leq SS - SINR < -3$ | 6 |
|  | ... |  |
| Group C | $6.5 \leq SS - SINR < 7$ | 9 |
|  | ... |  |
| Group B | $16.5 \leq SS - SINR < 17$ | 12 |
|  | ... |  |
| Group A | $27.5 \leq SS - SINR < 27$ | 15 |
|  | ... |  |
|  | $40 \leq SS - SINR$ |  |

FIG. 17

EP 4 021 056 A1

FIG. 18A

| Rx point | Distance Di between central TRP and Rx point [m] | Additional factor S [dB] | |
| --- | --- | --- | --- |
| | | Power class 3 | Power class 2 |
| Group A | Di<50 | 0 | 0 |
| Group B | 50≦Di<100 | 3 | 5 |
| Group C | 100≦Di | 7 | 10 |

FIG. 18B

| Rx point | Distance Di between central TRP and Rx point [m] | Additional factor S [dB] | DCI field |
| --- | --- | --- | --- |
| Group A | Di<50 | 0 | 00 |
| Group B | 50≦Di<100 | 2 | 01 |
| Group C | 100≦Di | 4 | 10 |
| reserved | reserved | reserved | 11 |

EP 4 021 056 A1

## FIG. 19A

| Rx point | Distance Di between central TRP and Rx point [m] | Additional factor S [dB] |
|---|---|---|
| Group A | Di<50 | 0 |
| Group B | 50≦Di<100 | 2 |
| Group C | 100≦Di | 4 |

## FIG. 19B

| Rx point | Distance Di between central TRP and Rx point [m] | Additional factor S [dB] | | |
|---|---|---|---|---|
| | | Type A | Type B | Type C |
| Group A | Di<50 | 0 | 0 | 3 |
| Group B | 50≦Di<100 | 2 | 4 | 6 |
| Group C | 100≦Di | 4 | 10 | 9 |

FIG. 20

EP 4 021 056 A1

FIG. 21

FIG. 22A

| Rx point | Additional factor S [dB] |
|---|---|
| Group A | 0 |
| Group B | 3 |
| Group C | 7 |
| Group D | 10 |

FIG. 22B

| Rx point | Additional factor S [dB] | DCI field |
|---|---|---|
| Group A | 0 | 00 |
| Group B | 3 | 01 |
| Group C | 7 | 10 |
| Group D | 10 | 11 |

EP 4 021 056 A1

FIG. 23A

CENTRAL TRP

RECEPTION POINT

DL

UL

UE

PATHLOSS REFERENCE RS

FIG. 23B

CENTRAL TRP

UL

UE

DL

PATHLOSS REFERENCE RS

EP 4 021 056 A1

# FIG. 24A

CENTRAL TRP

RECEPTION
POINT

UL

UE

DL

PATHLOSS
REFERENCE RS

# FIG. 24B

CENTRAL TRP

RECEPTION
POINT

DL

UL

UE

PATHLOSS
REFERENCE RS

EP 4 021 056 A1

## FIG. 25A

MAC CE

| | R | Serving Cell ID | BWP ID |
|---|---|---|---|
| OCTET 1 | | | |
| OCTET 2 | R | | |

Additional factor D

## FIG. 25B

| Additional factor command | Additional state D[dB] |
|---|---|
| 0 | -2 |
| 1 | -4 |
| 2 | -6 |
| 3 | -8 |

## FIG. 26A

| Rx point | Distance Di between central TRP and Rx point [m] | Additional factor S [dB] | |
|---|---|---|---|
| | | Power class 3 | Power class 2 |
| Group A | Di<50 | 0 | 0 |
| Group B | 50≦Di<100 | -3 | -5 |
| Group C | 100≦Di | -6 | -10 |

## FIG. 26B

| Rx point | Distance Di between central TRP and Rx point [m] | Additional factor S [dB] | DCI field |
|---|---|---|---|
| Group A | Di<50 | 0 | 00 |
| Group B | 50≦Di<100 | -2 | 01 |
| Group C | 100≦Di | -4 | 10 |
| reserved | reserved | reserved | 11 |

## FIG. 27A

| Rx point | Distance Di between central TRP and Rx point [m] | Additional factor S [dB] |
|---|---|---|
| Group A | Di<50 | 0 |
| Group B | 50≦Di<100 | -2 |
| Group C | 100≦Di | -4 |

## FIG. 27B

| Rx point | Distance Di between central TRP and Rx point [m] | Additional factor S [dB] | | |
|---|---|---|---|---|
| | | Type A | Type B | Type C |
| Group A | Di<50 | 0 | 0 | -3 |
| Group B | 50≦Di<100 | -2 | -4 | -6 |
| Group C | 100≦Di | -4 | -10 | -9 |

FIG. 28

EP 4 021 056 A1

FIG. 29

## FIG. 30A

| Rx point | Additional factor S [dB] |
|----------|--------------------------|
| Group A | 0 |
| Group B | -3 |
| Group C | -7 |
| Group D | -10 |

## FIG. 30B

| Rx point | Additional factor S [dB] | DCI field |
|----------|--------------------------|-----------|
| Group A | 0 | 00 |
| Group B | -3 | 01 |
| Group C | -7 | 10 |
| Group D | -10 | 11 |

MAC CE

| OCTET 1 | R | Serving Cell ID | BWP ID |
| OCTET 2 | R | |

PATHLOSS REFERENCE RS

FIG. 31

FIG. 32A

CENTRAL TRP

RECEPTION
POINT

UE

PATHLOSS
REFERENCE RS

FIG. 32B

CENTRAL TRP

RECEPTION
POINT

UE

PATHLOSS
REFERENCE RS

EP 4 021 056 A1

| TPC command field | Accumulated $\delta_{PUSCH,b,f,c}$ or $\delta_{SRS,b,f,c}$ [dB] | Absolute $\delta_{PUSCH,b,f,c}$ or $\delta_{SRS,b,f,c}$ [dB] |
|---|---|---|
| 0 | -1 | -4 |
| 1 | 0 | -1 |
| 2 | 1 | 1 |
| 3 | 3 | 4 |

FIG. 33

FIG. 34

FIG. 35

10

120 TRANSMITTING/RECEIVING SECTION

130

122 RF SECTION

123 MEASUREMENT SECTION

121 BASEBAND SECTION

1211 TRANSMISSION PROCESSING SECTION

1212 RECEPTION PROCESSING SECTION

110 CONTROL SECTION

140 TRANSMISSION LINE INTERFACE

CORE NETWORK30/ OTHER BASE STATION10

FIG. 36

10, 20

```
┌─────────────────────────────────────────────────────────┐
│                                                          │
│      1001                        1004                    │
│   ┌──────────────┐    1007    ┌──────────────────┐       │
│   │              │            │  COMMUNICATION   │       │
│   │  PROCESSOR   │────────●────│    APPARATUS     │       │
│   │              │            │                  │       │
│   └──────────────┘       │    └──────────────────┘       │
│                          │                               │
│      1002                │       1005                    │
│   ┌──────────────┐       │    ┌──────────────────┐       │
│   │              │       │    │     INPUT        │       │
│   │    MEMORY    │───────●────│   APPARATUS      │       │
│   │              │       │    │                  │       │
│   └──────────────┘       │    └──────────────────┘       │
│                          │                               │
│      1003                │       1006                    │
│   ┌──────────────┐       │    ┌──────────────────┐       │
│   │              │       │    │     OUTPUT       │       │
│   │   STORAGE    │───────●────│   APPARATUS      │       │
│   │              │            │                  │       │
│   └──────────────┘            └──────────────────┘       │
│                                                          │
└─────────────────────────────────────────────────────────┘
```

FIG. 37

## INTERNATIONAL SEARCH REPORT

| | International application No. |
|---|---|
| | PCT/JP2019/033152 |

### A. CLASSIFICATION OF SUBJECT MATTER
H04W 16/32(2009.01)i; H04W 52/24(2009.01)i
FI: H04W52/24; H04W16/32

According to International Patent Classification (IPC) or to both national classification and IPC

### B. FIELDS SEARCHED
Minimum documentation searched (classification system followed by classification symbols)
H04W4/00-99/00

Documentation searched other than minimum documentation to the extent that such documents are included in the fields searched
| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2013/021531 A1 (PANASONIC CORP.) 14.02.2013 | 1, 3-6 |
| A | (2013-02-14) paragraphs [0167]-[0210], fig. 16-17 | 2 |
| A | MOTOROLA MOBILITY, LENOVO, "Power control for multi-panel UE", 3GPPTSGRAN WG1 #97 R1-1907247 [online], [retrieved on 06 February 2020], Retrieved from the Internet:<URL:https://www.3gpp.org/ftp/tsg_ran/WG1 _RL1/TSGR1_97/Docs/R1-1907247.zip>, 04 May 2019, pp. 1-3 1 Introduction (Agreement (RAN1 AH-1901) [2]) | 2 |
| A | ERICSSON, "Enhancements to multibeam operation", 3GPP TSG-RAN WG1 Meeting #98 R1-1909225 [online], [retrieved on 06 February 2020], Retrieved from the Internet: <URL:https://www.3gpp.org/ftp/tsg_ran/WG1_RL1/TSGR 1_98/Docs/R1-1909225.zip>, 16 August 2019, pp. 1-20 2.2, 2.2.1, 2.2.2, 2.2.3, 2.4, 2.4.2.1, 2.4.2.2, 2.4.2.3 | 1-6 |

☒ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 February 2020 (06.02.2020) | 18 February 2020 (18.02.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2019/033152 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | US 2015/0304960 A1 (YANG, Rongzhen et al.) 22.10.2015 (2015-10-22) paragraphs [0002], [0027]-[0037], fig. 5 | 1-6 |

Form PCT/ISA/210 (continuation of second sheet) (January 2015)

**INTERNATIONAL SEARCH REPORT**

Information on patent family members

| International application No. |
|---|
| PCT/JP2019/033152 |

| Patent Documents referred in the Report | Publication Date | Patent Family | Publication Date |
|---|---|---|---|
| WO 2013/021531 A1 | 14 Feb. 2013 | US 2014/0177601 A1 paragraphs [0204]–[0252], fig. 16–17 EP 2725845 A1 | |
| US 2015/0304960 A1 | 22 Oct. 2015 | WO 2013/006200 A1 page 1, lines 10-26, page 7, line 19 to page 9, line 23, fig. 5 KR 10-2014-0031381 A CN 103931244 A | |

Form PCT/ISA/210 (patent family annex) (January 2015)

**REFERENCES CITED IN THE DESCRIPTION**

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010